# EUROPEAN PATENT SPECIFICATION

(11) **EP 3 222 508 B1**
(45) Date of publication and mention of the grant of the patent: **13.11.2019**
(21) Application number: 17161469.6
(22) Date of filing: 17.03.2017
(51) Int. Cl.: B62K 25/08, B62L 3/02, B62K 23/02, B62L 3/08, B62K 5/027, B62K 5/05, B62K 5/08, B62K 5/10, B62K 21/20

(54) **VEHICLE**
FAHRZEUG
VÉHICULE

(30) Priority: 18.03.2016 JP 2016055800
(43) Date of publication of application: 27.09.2017
(73) Proprietor: Yamaha Hatsudoki Kabushiki Kaisha, Iwata-shi, Shizuoka 438-8501 (JP)
(72) Inventor: MONNA, Takaaki, Iwata-shi, Shizuoka 438-8501 (JP); HIRAYAMA, Yosuke, Iwata-shi, Shizuoka 438-8501 (JP)
(74) Representative: Grünecker Patent- und Rechtsanwälte PartG mbB

(56) References cited:
- EP-A1- 2 703 270
- EP-A1- 2 899 109
- US-A1- 2005 247 160

## Description

The present invention relates to a vehicle including a body frame that can lean and two front wheels.

EP 2 703 270 A1 discloses a handlebar, which is mounted to a steering shaft, which is turnably supported by a head pipe constituting part of a body frame. A front frame extends forward from the head pipe, and a bush with an inner tube and an outer tube is supported on the front frame. Left and right steering arms are secured to the outer tube, and at their outer portions support left and right knuckles which support the front wheels. A first lever is connected to a second lever mounted to an upper end portion of a sub-steering shaft passing through the inner tube. The first lever is turned together with the steering shaft. A third lever installed at a lower end portion of the sub-steering shaft is connected to the knuckles via corresponding individual tie rods, and a rod has one end connected to the fourth lever secured to a rear portion of the outer tube and its other end connected to the body frame.

EP 2 899 109 A1 discloses a vehicle, which is provided with two front wheels and a vehicle frame that can tilt, wherein ride comfort can be maintained with a minimal increase in the size of a structure surrounding a steering shaft above the two front wheels. At least part of a tie rod in a steering-force transmission mechanism: overlaps part of a first support member or a second support member when viewed from in front of the vehicle with the vehicle in a maximal-tilt state in which the vehicle frame is maximally tilted in the left-right direction; and, viewed from the side of the vehicle with the vehicle frame vertical, is lower than a second cross member provided forwards of a first axis of a first side member and a second axis of a second side member, higher than a first front wheel and a second front wheel, rearwards of the front edge of the first front wheel and the front edge of the second front wheel, and forwards of the first axis of the first side member and the second axis of the second side member. A vehicle is known which is described in Patent Literature 1. This vehicle includes a right front wheel and a left front wheel, and a body frame that can lean.

The vehicle has a steering force transmission mechanism which controls steering angles of the right front wheel and the left front wheel by turning a handlebar. The steering force transmission mechanism includes the handlebar, a steering shaft and a tie rod. Grip portions are provided at both end portions of the handlebar. The handlebar is fixed to an upper portion of the steering shaft. The steering shaft is connected to the right front wheel and the left front wheel via the tie rod. The right front wheel and the left front wheel are connected together via the tie rod. When a rider turns the handlebar, the tie rod is displaced via the steering shaft, and the right front wheel and the left front wheel which are connected to the tie rod turn about a right turning axis and a left turning axis, respectively. This enables the rider to control the turning angles of the right front wheel and the left front wheel.

[Patent Literature 1] International Publication No. 2012/007819

Incidentally, since the right front wheel and the left front wheel pass on different road surfaces, a frictional force generated between the right front wheel and the corresponding road surface differs from a frictional force generated between the left front wheel and the corresponding road surface in many cases. Since road surfaces on which the right front wheel and the left front wheel pass change moment by moment while the vehicle is running, the frictional forces acting on the right front wheel and the left front wheel also change moment by moment. When a frictional force generated between the right front wheel and the corresponding road surface differs from a frictional force generated between the left front wheel and the corresponding road surface, vibration is generated in the tie rod which is connected to the right front wheel and the left front wheel. This vibration is transmitted to the grip portions via the steering shaft and the handlebar, leading a risk of the rider being given a sensation of discomfort. In particular, since the rider grips on the grip portions when brakes are applied, the vibration attributed to the fact that the right front wheel and the left front wheel behave differently when the brakes are applied tends to be easily transmitted to the rider.

It is an object of the present invention to provide a vehicle which makes it difficult for vibration attributed to different behaviors conducted by a right front wheel and a left front wheel to be transmitted to a rider. According to the present invention said object is solved by a vehicle having the features of the independent claim 1. Preferred embodiments are laid down in the dependent claims.
(1) With a view to achieving the object, according to an aspect of the invention, there is provided a vehicle having:
   a body frame;
   a right front wheel and a left front wheel which are provided so as to be aligned side by side in a left-and-right direction of the body frame;
   a right brake device which can apply a brake force to the right front wheel;
   a left brake device which can apply a brake force to the left front wheel;
   a grip portion on which a rider grips; and
   a steering force transmission mechanism which is configured to transmit a steering force inputted into the grip portion to the right front wheel and the left front wheel, wherein
   the steering force transmission mechanism has:
      a steering shaft which can turn about an intermediate turning axis which extends in an up-and-down direction of the body frame;
      a handlebar which is provided at an upper portion of the steering shaft; and
      a tie rod which is configured to transmit a turn of the steering shaft to the right front wheel and the left front wheel, wherein
   a brake operating device which is configured to operate at least one of the right brake device and the left brake device and the grip portion are provided on at least one end portion of the handlebar, and wherein
   a rubber component which is configured to suppress the transmission of vibration which is attributed to a difference between a frictional force generated between the right front wheel and a corresponding road surface and a frictional force generated between the left front wheel and a corresponding road surface to the grip portion is provided in the steering force transmission mechanism, wherein the steering force which is inputted into the grip portion is configured to be transmitted to the right front wheel and the left front wheel via the rubber component, wherein the rubber component has a metallic annular or tubular outer member;
   a metallic inner member which is provided inside the outer member; and
   a rubber portion which is connected to the outer member and the inner member while filling at least part of a space defined between the outer member and the inner member, and
   the inner member and the outer member may individually be fixed to the steering force transmission mechanism, allowing the inner member and the outer member to be displaced relative to each other by the rubber portion being elastically deformed.

   According to the vehicle of this embodiment, the rubber component suppresses the transmission of the vibration attributed to the difference between the frictional force generated between the right front wheel and the corresponding road surface and the frictional force generated between the left front wheel and the corresponding road surface to the grip portion. This makes it difficult for the vibration to be transmitted to the rider who grips on the grip portion when attempting to apply the brakes. Moreover, according to the vehicle configured as described above, the rubber component can be made up of the simple configuration. The annular or tubular shape includes a partially cut out annular shape or a tubular shape having a slit in an axial direction.
(2) The vehicle may have:
   a right shock absorbing device which supports rotatably the right front wheel and which supports the right front wheel so as to be displaced relative to the body frame; and
   a left shock absorbing device which supports rotatably the left front wheel and which supports the left front wheel so as to be displaced relative to the body frame.

   Even though the right shock absorbing device and the left shock absorbing device are provided on the vehicle, the transmission of the vibration attributed to the difference between the friction force generated between the right front wheel and the corresponding road surface and the frictional force generated between the left front wheel and the corresponding road surface to the grip portion
   cannot be suppressed effectively. In the vibration, a component which attempts to displace the right front wheel and the left front wheel in a front-and-rear direction is dominant, and hence, the vibration cannot be suppressed effectively by the right shock absorbing device and the left shock absorbing device which support the right front wheel and the left front wheel so as to be displaced in the up-and-down direction. In addition, since the vibration displaces the right shock absorbing device together with the right front wheel and also displaces the left shock absorbing device together with the left front wheel, the weight of the components which are displaced becomes great. In the event that the vibration of these heavy components is transmitted to the light handlebar, the amplitude of the vibration is increased, leading to a fear that a sensation of discomfort that the rider feels is enhanced.
   According to the vehicle configured as described above, however, the rubber component can suppress the transmission of the vibration to the grip portion efficiently, whereby the sensation of discomfort that the rider feels can be reduced.
(3) The vehicle may have a link mechanism which has a cross member which is supported on the body frame so as to turn about a link axis which extends in a front-and-rear direction of the body frame and which supports the right front wheel and the left front wheel so as to be displaced relative to the body frame in relation to the up-and-down direction of the body frame, thereby causing the body frame to lean to the right of the vehicle when the vehicle is configured to turn right and causing the body frame to lean to the left of the vehicle when the vehicle is configured to turn left.
   The vibration of the right front wheel and the left front wheel tends to be transmitted easily to the body frame, the handlebar which is supported on the body frame so as to turn and the grip portion provided on the handlebar via the link mechanism. Since the link mechanism is made up of the highly rigid member, the vibration transmitted therethrough is attenuated less. Owing to this, in the vehicle including the link mechanism, the vibration of the right front wheel and the left front wheel tends to be transmitted easily to the grip portion. In addition, since the cross member turns about the link axis which extends in the front-and-rear direction of the body frame, the link mechanism has difficulty in suppressing the vibration of the right front wheel and the left front wheel acting in the front-and-rear direction.
   According to the vehicle configured as described above, even with the vehicle including the link mechanism described above, the vibration of the right front wheel and the left front wheel acting in the front-and-rear direction can be restrained effectively from being transmitted to the grip portion by the rubber component.
(4) In the vehicle, the link mechanism may have:
   a right side member which is supported so as to turn about a right axis which extends in the front-and-rear direction of the body frame at a right portion of the cross member and which supports the right front wheel so as to turn about a right turning axis which extends in the up-and-down direction of the body frame; and
   a left side member which is supported so as to turn about a left axis which is parallel to the right axis at a left portion of the cross member and which supports the left front wheel so as to turn about a left turning axis which is parallel to the right turning axis.

   The vehicle including the parallelogram link mechanism is easy to be designed to have a reduced vehicle width. However, the handlebar tends to be disposed in a position lying far away from the right front wheel and the left front wheel in relation to the up-and-down direction of the body frame. In the event that the handlebar is provided in the position lying far away from the right front wheel and the left front wheel, vibration generated in the right front wheel and the left front wheel is amplified and tends to be transmitted easily to the grip portion of the handlebar which lies far away upwards.
   According to the configuration of the vehicle configured as described above, however, in the event that the rubber components is installed in the vehicle including the parallelogram link mechanism, the vibration which is to be transmitted to the grip portion is preferably suppressed with ease.
(5) In the vehicle, a configuration may be adopted in which
   the steering force transmission mechanism has a pitman arm which is fixed to the steering shaft at one end and is connected to the tie rod so as to turn relative thereto at the other end thereof, and in which
   the rubber component is provided between the tie rod and the pitman arm so that a steering force inputted into the grip portion is transmitted from the pitman arm to the tie rod via the rubber component.
   According to the vehicle configured as described above, since the vibration can be suppressed in the position lying near the right front wheel and the left front wheel which constitute a source of vibration, it is possible to suppress the vibration of all the members provided upstream of the tie rod along the steering force transmission path including the pitman arm.
(6) In the vehicle, the body frame may have a headpipe through which the steering shaft is inserted, and
   the rubber component may be provided between the headpipe and the steering shaft.
   According to the vehicle configured as described above, since the rubber component is provided in an interior of the headpipe, there is no need to provide a space where to provide the rubber component. Since the components layout adopted in existing vehicles does not have to be modified greatly, the design of the vehicle can be facilitated.
(7) In the vehicle, a configuration may be adopted in which the rubber component is provided between the handlebar and the steering shaft, and in which
   a steering force inputted into the grip portion is transmitted from the handlebar to the steering shaft via the rubber component.
   According to the vehicle configured as described above, since the rubber component is provided in the position lying near the handlebar, all the vibration which is transmitted to the grip portion including vibration which is transmitted from a portion other than the right front wheel and the left front wheel such as a rear wheel, for example, to the handlebar via the body frame can be suppressed.
(8) In the vehicle, the inner member and the outer member may extend in the up-and-down direction of the body frame, and
   the outer member and the inner member may be able to be displaced relative to each other by the rubber portion being elastically deformed.
(9) In the vehicle, the outer member and the inner member may be able to be displaced relative to each other in the front-and-rear direction of the body frame by the rubber portion being elastically deformed.
(10) In the vehicle, the outer member and the inner member may be able to be displaced relative to each other in the front-and-rear direction of the body frame and in the left-and-right direction of the body frame by the rubber portion being elastically deformed.
(11) In the vehicle, the right shock absorbing device may support the right front wheel so as to be displaced relative to an upper portion in the direction of a right extending and contracting axis which extends in the up-and-down direction of the body frame,
   the left shock absorbing device may support the left front wheel so as to be displaced relative to an upper portion in the direction of a left extending and contracting axis which is parallel to the right extending and contracting axis, and
   the inner member and the outer member may be able to be displaced relative to each other about an axis following the right extending and contracting axis by the rubber portion of the rubber component being elastically deformed.

According to the vehicle configured as described above, since the rubber component can be displaced about the axis which follows the right extending and contracting axis and the left extending and contracting axis, the rubber component can suppress the vibration acting in the direction in which the right shock absorbing device and the left shock absorbing device have difficulty in absorbing vibration.
Fig. 1 is a left side view of the whole of a vehicle according to a first embodiment resulting when viewed from the left thereof.
Fig. 2 is a front view showing a front portion of the vehicle shown in Fig. 1.
Fig. 3 is a front view of a lower portion of a steering shaft.
Fig. 4 is a schematic plan view showing the configuration of a steering force transmission mechanism.
Fig. 5 is a plan view showing the front portion of the vehicle shown in Fig. 1.
Fig. 6 is a plan view showing the front portion of the vehicle shown in Fig. 1 when the vehicle is steered.
Fig. 7 is a front view showing the front portion of the vehicle shown in Fig. 1 when the vehicle is caused to lean to the left.
Fig. 8 is a front view showing the front portion of the vehicle shown in Fig. 1 when the vehicle is caused to lean to the left and is steered.
Fig. 9 is a side sectional view showing the lower portion of the steering shaft, a lower portion of a headpipe, a pitman arm, a central joint and a central portion of a tie rod.
Fig. 10 is a view, corresponding to Fig. 9, which shows a vehicle according to a second embodiment of the invention.
Fig. 11 is a view showing a rubber component of a vehicle according to a third embodiment of the invention.
Fig. 12A is a view showing a rubber component of a vehicle according to a fourth embodiment of the invention.
Fig. 12B is a view showing a rubber component of a vehicle according to a fourth embodiment of the invention.
Fig. 13A is a view showing a rubber component of a vehicle according to a fifth embodiment of the invention.
Fig. 13B is a view showing a rubber component of a vehicle according to a fifth embodiment of the invention.
Fig. 14 is a sectional view showing the rubber component of the vehicle according to the fifth embodiment of the invention.

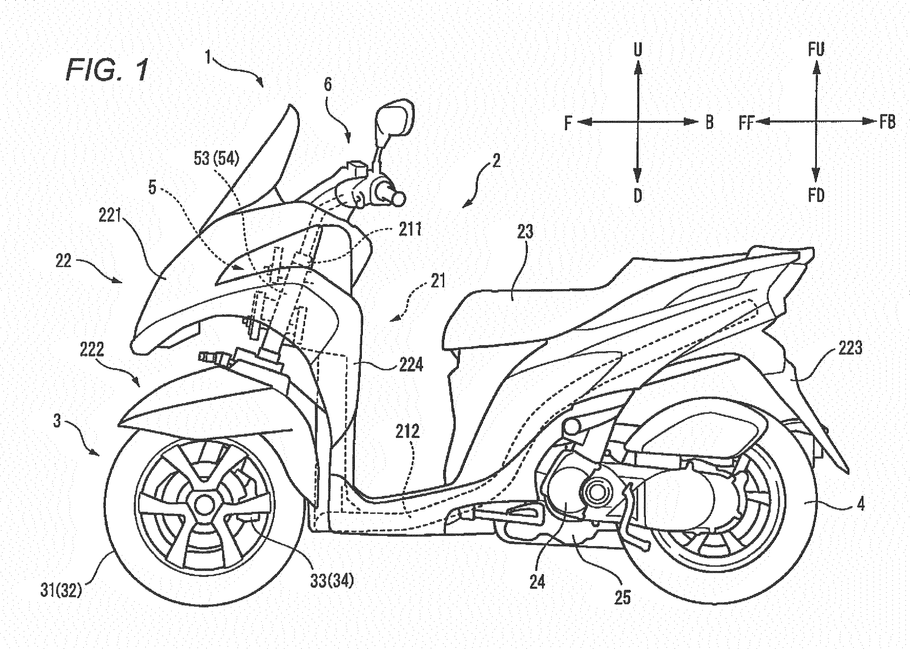

Referring to Figs. 1 to 9, a vehicle 1 according to a first embodiment will be described. The vehicle 1 is a vehicle which includes a body frame which can lean and two front wheels which are disposed so as to be aligned side by side in a left-and-right direction of the body frame.

As shown in Fig. 1, the vehicle 1 includes a vehicle main body portion 2, two front wheels 3, a rear wheel 4, a link mechanism 5 and a steering force transmission mechanism 6.

The vehicle main body portion 2 includes a body frame 21, a body cover 22, a seat 23, a power unit 24, and a rear arm 25.

In Fig. 1, the body frame 21 is in an upright state. The following description to be made while referring to Fig. 1 is based on the premise that the body frame 21 is in the upright state. Fig. 1 is a left side view resulting when the whole of the vehicle 1 is viewed from the left in the left-and-right direction of the body frame 21.

The body frame 21 includes a headpipe 211 and a main frame 212.

The headpipe 211 is disposed at a front portion of the vehicle 1. When viewing the vehicle 1 from the left in the left-and-right direction of the body frame 21, an upper portion of the headpipe 211 is disposed behind a lower portion of the headpipe 211 in the front-and-rear direction of the body frame 21.

The main frame 212 is connected to the headpipe 211. The main frame 212 is disposed behind the headpipe 211 in the front-and-rear direction of the body frame 21. The main frame 212 supports the seat 23, the power unit 24 and the rear arm 25.

The power unit 24 includes a power source such as an engine, an electric motor, a battery and the like and a transmission mechanism such as a transmission. Driving force generated by the power source is transmitted to the rear wheel 4 through the transmission mechanism.

The rear arm 25 extends in the front-and-rear direction of the body frame 21. A front end portion of the rear arm 25 is supported on the main frame 212 and is allowed to turn about an axis that extends in the left-and-right direction of the body frame 21. A rear end portion of the rear arm 25 supports the rear wheel 4.

The body cover 22 is a body part that covers at least part of a group of constituent parts that make up the vehicle 1. The body cover 22 includes a front cover 221, two front mudguards 222, a rear mudguard 223 and a leg shield 224.

The front cover 221 is disposed ahead of the seat 23 in the front-and-rear direction of the body frame 21. The front cover 221 covers the link mechanism 5 and at least part of the steering force transmission mechanism 6. The front cover 221 is disposed so as not to be displaced relative to the body frame 21.

At least portions of the individual front mudguards 222 are individually disposed directly below the front cover 221. At least portions of the individual front mudguards 222 are disposed above the individual front wheels 3.

The two front wheels 3 are disposed below the headpipe 211 in an up-and-down direction of the body frame 21. At least portions of the two front wheels 3 are disposed directly below the front cover 221 in the up-and-down direction of the body frame 21.

At least part of the rear wheel 4 is disposed below the seat 23 in the up-and-down direction of the body frame 21. At least part of the rear wheel 4 is disposed directly below the rear mudguard 223 in the up-and-down direction of the body frame 21.

The leg shield 224 is disposed behind the two front wheels 3 and ahead of the seat 23 in the front-and-rear direction of the body frame 21. The leg shield 224 is disposed in a position where the leg shield 224 covers at least portions of the legs of the rider who sits on the seat 23 when viewed from the front of the vehicle 1.

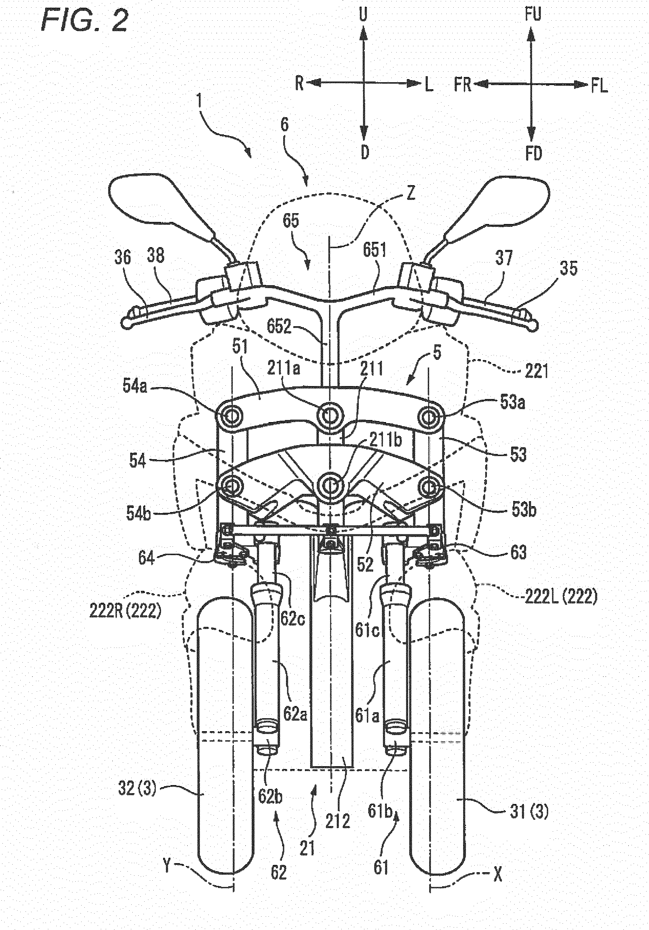

Fig. 2 is a front view of the front portion of the vehicle 1 when viewed from the front in the front-and-rear direction of the body frame 21. In Fig. 2, the body frame 21 is in the upright state. The following description to be made while referring to Fig. 2 is based on the premise that the body frame 21 is in the upright state. Fig. 2 shows a state in which those shown by solid lines are seen through the front cover 221, the two front mudguards 222 and the leg shield 224 which are shown by dashed lines.

The two front wheels 3 include a left front wheel 31 and a right front wheel 32. The left front wheel 31 is disposed on the left of the headpipe 211 which is part of the body frame 21 in the left-and-right direction of the body frame 21. The right front wheel 32 is disposed on the right of the headpipe 211 in the left-and-right direction of the body frame 21. The left front wheel 31 and the right front wheel 32 are disposed so as to be aligned side by side in the left-and-right direction of the body frame 21.

The two front mudguards 222 include a left mudguard 222L and a right mudguard 222R. The left mudguard 222L covers at least part of an upper surface of the left front wheel 31. The right mudguard 222R covers at least part of an upper surface of the right front wheel 32.

The headpipe 211 supports a steering shaft 652 so as to turn. The steering shaft 652 can turn about an intermediate turning axis Z which extends in the up-and-down direction of the body frame 21. A handlebar 651 is fixed to an upper portion of the steering shaft 652.

The handlebar 651 extends in the left-and-right direction of the body frame 21. The rider can steer the vehicle 1 by turning the handlebar 651 about the intermediate turning axis Z.

A left grip portion 37 and a left brake operating device 35 are provided at a left end portion of the handlebar 651. The rider can grip on the left grip portion 37 by his or her left hand. The left brake operating device 35 is provided directly ahead of the left grip portion 37. A right end portion of the left brake operating device 35 is supported so as to be turned on the handlebar 651. The rider can operate the left brake operating device 35 by gripping on the left grip portion 37 and the left brake operating device 35 by his or her left hand. When the rider operates the left brake operating device 35, a rear brake device, not shown, applies a brake force to the rear wheel 4.

A right grip portion 38 and a right brake operating device 36 are provided at a right end portion of the handlebar 651. The rider can grip on the right grip portion 38 by his or her right hand. The right brake operating device 36 is provided directly ahead of the right grip portion 38. A left end portion of the right brake operating device 36 is supported so as to be turned on the handlebar 651. The rider can operate the right brake operating device 36 by gripping on the right grip portion 38 and the right brake operating device 36 by his or her right hand. When the rider operates the right brake operating device 36, a left brake device 33 applies a brake force to the left front wheel 31, and a right brake device 34 applies a brake force to the right front wheel 32.

The steering force transmission mechanism 6 includes a left shock absorbing device 61, a right shock absorbing device 62, a left bracket 63 and a right bracket 64.

The left shock absorbing device 61 includes a left lower portion 61a. The left lower portion 61a supports the left front wheel 31. The left lower portion 61a extends along a left extending and contracting axis which extends in the up-and-down direction of the body frame 21. The left lower portion 61a includes a left supporting portion 61b at a lower end portion thereof. The left front wheel 31 is supported on the left supporting portion 61b.

The left shock absorbing device 61 includes a left upper portion 61c. The left upper portion 61c extends along the left extending and contracting axis. The left upper portion 61c is disposed directly above the left lower portion 61a in the up-and-down direction of the body frame 21 with part thereof inserted in the left lower portion 61a. An upper end portion of the left upper portion 61c is fixed to the left bracket 63. The left shock absorbing device 61 and the left bracket 63 make up a left front wheel supporting portion.

The left shock absorbing device 61 is a so-called telescopic shock absorbing device. The left upper portion 61c moves relative to the left lower portion 61a along the left extending and contracting axis, whereby the left shock absorbing device 61c can extend and contract along the left extending and contracting axis. This enables the left shock absorbing device 61 to absorb a displacement of the left front wheels 31 relative to the left upper portion 61c in the up-and-down direction of the body frame 21.

The right shock absorbing device 62 includes a right lower portion 62a. The right lower portion 62a supports the right front wheel 32. The right lower portion 62a extends along a right extending and contracting axis which extends in the up-and-down direction of the body frame 21. The right extending and contracting axis is parallel to the left extending and contracting axis. The right lower portion 62a includes a right supporting portion 62b at a lower end portion thereof. The right front wheel 32 is supported on the right supporting portion 62b.

The right shock absorbing device 62 includes a right upper portion 62c. The right upper portion 62c extends along the right extending and contracting axis. The right upper portion 62c is disposed directly above the right lower portion 62a in the up-and-down direction of the body frame 21 with part thereof inserted in the right lower portion 62a. An upper end portion of the right upper portion 62c is fixed to the right bracket 64. The right shock absorbing device 62 and the right bracket 64 make up a right front wheel supporting portion.

The right shock absorbing device 62 is a so-called telescopic shock absorbing device. The right upper portion 62c moves relative to the right lower portion 62a along the right extending and contracting axis, whereby the right shock absorbing device 62 can extend and contract along the right extending and contracting axis. This enables the right shock absorbing device 62 to absorb a displacement of the right front wheels 32 relative to the right upper portion 62c in the up-and-down direction of the body frame 21.

The left brake device 33 is provided at a lower portion of the left shock absorbing device 61. The left brake device 33 applies a brake force to the left front wheel 31.

The left brake device 33 has a left brake caliper and a left brake disc. The left brake caliper is fixed to the lower portion of the left shock absorbing device 61. The left brake disc is fixed to the left front wheel 31. The left brake disc can rotate relative to the left brake caliper.

The left brake caliper applies a brake force to the left front wheel 31 by holding the left brake disc with a pair of brake pads therebetween. The left brake caliper operates in response to the operation of the right brake operating device 36 provided on the handlebar 651.

The right brake device 34 is provided at a lower portion of the right shock absorbing device 62. The right brake device 34 applies a brake force to the right front wheel 32.

The right brake device 34 has a right brake caliper and a right brake disc. The right brake caliper is fixed to the lower portion of the right shock absorbing device 62. The right brake disc is fixed to the right front wheel 32. The right brake disc can rotate relative to the right brake caliper.

The right brake caliper applies a brake force to the right front wheel 32 by holding the right brake disc with a pair of brake pads therebetween. The right brake caliper operates in response to the operation of the right brake operating device 36 provided on the handlebar 651.

In the vehicle 1 according to this embodiment, the link mechanism 5 adopts a four parallel joint link system (also referred to as a parallelogram link).

The link mechanism 5 is disposed below the handlebar 651 in the up-and-down direction of the body frame 21. The link mechanism 5 is disposed above the left front wheel 31 and the right front wheel 32 in the up-and-down direction of the body frame 21. The link mechanism 5 includes an upper cross member 51, a lower cross member 52, a left side member 53 and a right side member 54. The link mechanism 5 is not interlocked with the turning of the steering shaft 652 about the intermediate steering axis Z which is triggered in association with the operation of the handlebar 651. Namely, the link mechanism 5 does not turn about the intermediate steering axis Z relative to the body frame 21.

The headpipe 211 has an upper intermediate connecting portion 211a. An intermediate portion of the upper cross member 51 is connected to the headpipe 211 by way of the upper intermediate connecting portion 211a. The upper cross member 51 is able to turn relative to the headpipe 211 about an upper intermediate connecting axis which passes through the upper intermediate connecting portion 211a to extend in the front-and-rear direction of the body frame 21.

The left side member 53 has an upper left connecting portion 53a. A left end portion of the upper cross member 51 is connected to the left side member 53 by way of the upper left connecting portion 53a. The upper cross member 51 is able to turn relative to the left side member 53 about an upper left connecting axis which passes through the upper left connecting portion 53a to extend in the front-and-rear direction of the body frame 21.

The right side member 54 has an upper right connecting portion 54a. A right end portion of the upper cross member 51 is connected to the right side member 54 by way of the upper right connecting portion 54a. The upper cross member 51 is able to turn relative to the right side member 54 about an upper right connecting axis which passes through the upper right connecting portion 54a to extend in the front-and-rear direction of the body frame 21.

The headpipe 211 has a lower intermediate connecting portion 211b. An intermediate portion of the lower cross member 52 is connected to the headpipe 211 by way of the lower intermediate connecting portion 211b. The lower cross member 52 is able to turn relative to the headpipe 211 about a lower intermediate connecting axis which passes through the lower intermediate connecting portion 211b to extend in the front-and-rear direction of the body frame 21.

The left side member 53 has a lower left connecting portion 53b. A left end portion of the lower cross member 52 is connected to the left side member 53 by way of the lower left connecting portion 53b. The lower cross member 52 is able to turn relative to the left side member 53 about a lower left connecting axis which passes through the lower left connecting portion 53b to extend in the front-and-rear direction of the body frame 21.

The right side member 54 has a lower right connecting portion 54b. A right end portion of the lower cross member 52 is connected to the right side member 54 by way of the lower right connecting portion 54b. The lower cross member 52 is able to turn relative to the right side member 54 about a lower right connecting axis which passes through the lower right connecting portion 54b to extend in the front-and-rear direction of the body frame 21.

The upper intermediate connecting axis, the upper right connecting axis, the upper left connecting axis, the lower intermediate connecting axis, the lower right connecting axis and the lower left connecting axis extend parallel to one another. The upper intermediate connecting axis, the upper right connecting axis, the upper left connecting axis, the lower intermediate connecting axis, the lower right connecting axis and the lower left connecting axis are disposed above the left front wheel 31 and the right front wheel 32 in the up-and-down direction of the body frame 21.

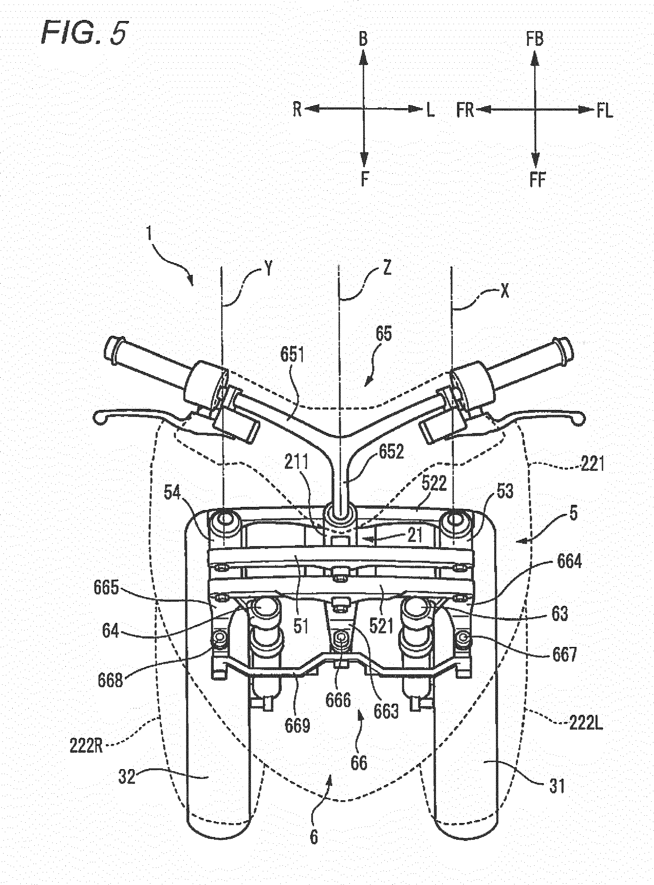

Fig. 5 is a plan view of the front portion of the vehicle 1 as viewed from thereabove in the up-and-down direction of the body frame 21. In Fig. 5, the body frame 21 is in the upright state. The following description to be made while referring to Fig. 5 is based on the premise that the body frame 21 is in the upright state. Fig. 5 shows a state which is seen through the front cover 221, the left mudguard 222L and the right mudguard 222R which are shown by dashed lines.

The upper cross member 51 is disposed ahead of the headpipe 211 in the front-and-rear direction of the body frame 21. The upper cross member 51 extends in the left-and-right direction of the body frame 21.

The lower cross member 52 includes a front element 521 and a rear element 522. The front element 521 is disposed ahead of the headpipe 211 in the front-and-rear direction of the body frame 21. The rear element 522 is disposed behind the headpipe 211 in the front-and-rear direction of the body frame 21. The front element 521 and the rear element 522 extend in the left-and-right direction of the body frame 21. The lower cross member 52 is disposed below the upper cross member 51 in the up-and-down direction of the body frame 21.

The steering force transmission mechanism 6 includes the handlebar 651 and the steering shaft 652. The handlebar 651 is attached to an upper portion of the steering shaft 652. A portion of the steering shaft 652 is supported by the headpipe 211 so as to turn therein. The intermediate turning axis Z of the steering shaft 652 extends in the up-and-down direction of the body frame 21. As shown in Fig. 1, the upper portion of the steering shaft 652 is disposed behind a lower portion thereof in the front-and-rear direction of the body frame 21. Consequently, the intermediate turning axis Z of the steering shaft 652 is inclined in the front-and-rear direction of the body frame 21. The steering shaft 652 turns about the intermediate turning axis Z in response to the operation of the handlebar 651 by the rider.

As shown in Figs. 2 and 5, the left side member 53 is disposed directly on the left of the headpipe 211 in the left-and-right direction of the body frame 21. The left side member 53 is disposed above the left front wheel 31 in the up-and-down direction of the body frame 21. The left side member 53 extends in a direction in which the headpipe 211 extends. The left side member 53 extends in a direction in which the intermediate turning axis Z of the steering shaft 652 extends. An upper portion of the left side member 53 is disposed behind a lower portion thereof in the front-and-rear direction of the body frame 21.

The left bracket 63 includes a left turning member, not shown, at an upper portion thereof. The left turning member is disposed in an interior of the left side member 53 and extends in the same direction as the direction in which the left side member 53 extends. The left turning member can turn about a left turning axis X relative to the left side member 53. Namely, the left bracket 63 can turn about the left turning axis X relative to the left side member 53. The left turning axis X extends in the direction in which the left side member 53 extends. As shown in Fig. 2, the left steering axis X extends parallel to the intermediate turning axis Z of the steering shaft 652 in the up-and-down direction of the body frame 21. As shown in Fig. 5, the left turning axis X extends parallel to the intermediate turning axis Z of the steering shaft 652 in the front-and-rear direction of the body frame 21.

As shown in Figs. 2 and 5, the right side member 54 is disposed directly on the right of the headpipe 211 in the left-and-right direction of the body frame 21. The right side member 54 is disposed above the right front wheel 32 in the up-and-down direction of the body frame 21. The right side member 54 extends in the direction in which the headpipe 211 extends. The right side member 54 extends in the direction in which the intermediate turning axis Z of the steering shaft 652 extends. An upper portion of the right side member 54 is disposed behind a lower portion thereof in the front-and-rear direction of the body frame 21.

The right bracket 64 includes a right turning member, not shown, at an upper portion thereof. The right turning member is disposed in an interior of the right side member 54 and extends in the same direction as the direction in which the right side member 54 extends. The right turning member can turn about a right turning axis Y relative to the right side member 54. Namely, the right bracket 64 can turn about the right turning axis Y relative to the right side member 54. The right turning axis Y extends in the direction in which the right side member 54 extends. As shown in Fig. 2, the right turning axis Y extends parallel to the intermediate turning axis Z of the steering shaft 652 in the up-and-down direction of the body frame 21. As shown in Fig. 5, the right turning axis Y extends parallel to the intermediate turning axis Z of the steering shaft 652 in the front-and-rear direction of the body frame 21.

Thus, as has been described above, the upper cross member 51, the lower cross member 52, the left side member 53 and the right side member 54 are supported on the body frame 21 so that the upper cross member 51 and the lower cross member 52 are held in postures which are parallel to each other and so that the left side member 53 and the right side member 54 are held in postures which are parallel to each other.

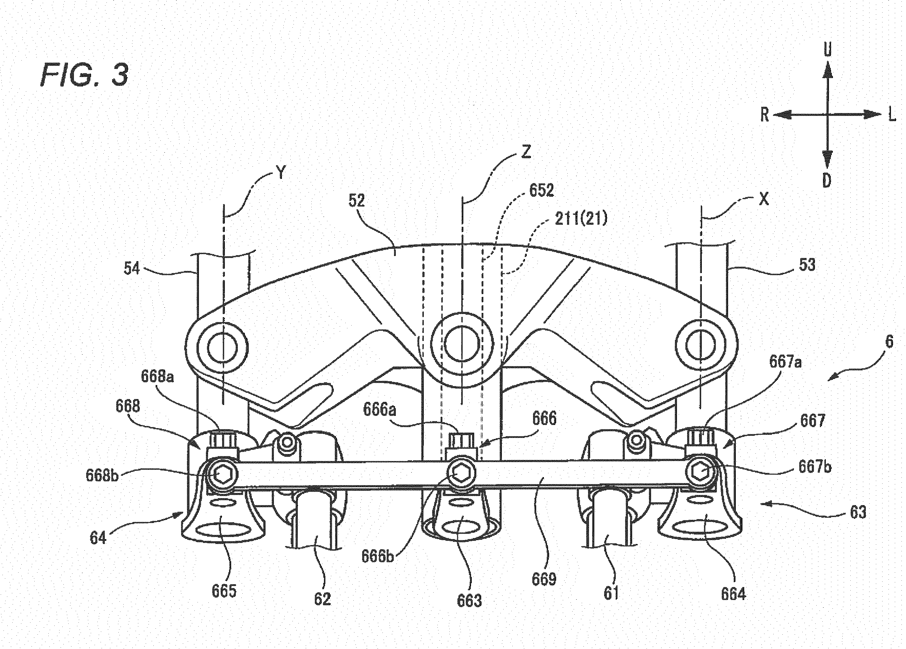

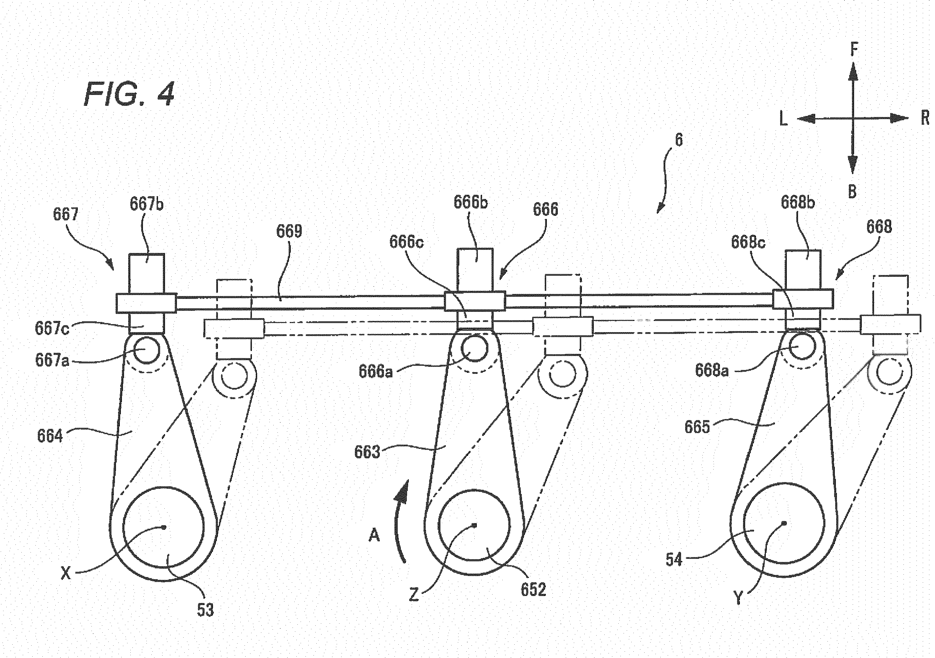

Fig. 3 is a front view of a lower portion of the steering shaft 652. Fig. 3 shows the steering force transmission mechanism 6 in an enlarged fashion. Fig. 4 is a schematic plan view showing the configuration of the steering force transmission mechanism 6. Fig. 4 shows the steering force transmission mechanism 6 as seen from thereabove with the configurations of the link mechanism 5, the left bracket 63 and the right bracket 64 omitted. Dashed chain lines indicate a state in which the steering shaft 652 is turned in a direction indicated by an arrow A in Fig. 4.

The steering force transmission mechanism 6 transmits a steering force with which the rider operates the handlebar 651 to the left bracket 63 and the right bracket 64. The left bracket 63 turns about the left turning axis X together with the left front wheel 31. The right bracket 64 turns about the right turning axis Y together with the right front wheel 32.

As shown in Fig. 3, the steering force transmission mechanism 6 includes a pitman arm 663, a left transmission plate 664, a right transmission plate 665, an intermediate joint 666, a left joint 667, a right joint 668, and a tie rod 669.

The pitman arm 663 is connected to the lower portion of the steering shaft 652. The pitman arm 663 turns together with the steering shaft 652. The pitman arm 663 can turn about the intermediate turning axis Z.

The left transmission plate 664 is disposed directly on the left of the pitman arm 663. The left transmission plate 664 is connected to a lower portion of the left bracket 63. The left transmission plate 664 cannot turn relative to the left bracket 63. The left transmission plate 664 can turn about the left turning axis X relative to the left side member 53.

The right transmission plate 665 is disposed directly on the right of the pitman arm 663. The right transmission plate 665 is connected to a lower portion of the right bracket 64. The right transmission plate 665 cannot turn relative to the right bracket 64. The right transmission plate 665 can turn about the right turning axis Y relative to the right side member 54.

The tie rod 669 is provided ahead of the steering shaft 652, the left side member 53 and the right side member 54. A left portion of the tie rod 669 is connected to the left transmission plate 664 via the left joint 667. A right portion of the tie rod 669 is connected to the right transmission plate 665 via the right joint 668. A central portion of the tie rod 669 is connected to the pitman arm 663 via the intermediate joint 666.

As shown in Fig. 4, the left joint 667 is provided at a front portion of the left transmission plate 664. The left joint 667 has a left rear bearing 667a, a left front bearing 667b, a left connecting portion 667c which connects the left front bearing 667b and the left rear bearing 667a together.

The left rear bearing 667a connects the left connecting portion 667c and the left transmission plate 664 together so as to turn. The left connecting portion 667c can turn relative to the left transmission plate 664 about an axis which extends substantially parallel to the left turning axis X.

The left front bearing 667b is provided ahead of the left rear bearing 667a. The left front bearing 667b connects the left connecting portion 667c and the tie rod 669 together so as to turn. The left connecting portion 667c can turn relative to the tie rod 669 about an axis which intersects an axis of the left rear bearing 667a substantially at right angles and extends in the front-and-rear direction of the body frame 21.

In this way, the left joint 667 connects the tie rod 669 and the left transmission plate 664 together so as to turn about an axis which extends in the up-and-down direction of the body frame 21 and an axis which extends in the front-and-rear direction of the body frame 21.

The right joint 668 is provided at a front portion of the right transmission plate 665. The right joint 668 has a right rear bearing 668a, a right front bearing 668b, and a right connecting portion 668c which connects the right rear bearing 668a and the right front bearing 668b together.

The right rear bearing 668a connects the right connecting portion 668c and the right transmission plate 665 together so as to turn. The right connecting portion 668c can turn relative to the right transmission plate 665 about an axis which extends substantially parallel to the right turning axis Y.

The right front bearing 668b is provided ahead of the right rear bearing 668a. The right front bearing 668b connects the right connecting portion 668c and the tie rod 669 together so as to turn. The right connecting portion 668c can turn relative to the tie rod 669 about an axis which intersects an axis of the right rear bearing 668a substantially at right angles and extends in the front-and-rear direction of the body frame 21.

In this way, the right joint 668 connects the tie rod 669 and the right transmission plate 665 together so as to turn about an axis which extends in the up-and-down direction of the body frame 21 and an axis which extends in the front-and-rear direction of the body frame 21.

The intermediate joint 666 has an intermediate rear bearing 666a, an intermediate front bearing 666b and an intermediate connecting portion 666c which connects together the intermediate rear bearing 666a and the intermediate front bearing 666b.

The intermediate rear bearing 666a connects together the intermediate connecting portion 666c and the pitman arm 663 so as to turn. The intermediate connecting portion 666c can turn relative to the pitman arm 663 about an axis which extends substantially parallel to the intermediate turning axis Z.

The intermediate front bearing 666b is provided ahead of the intermediate rear bearing 666a. The intermediate front bearing 666b connects together the intermediate connecting portion 666c and the tie rod 669 so as to turn. The intermediate connecting portion 666c intersects an axis of the intermediate rear bearing 666a substantially at right angles and can turn relative to the tie rod 669 about an axis which extends in the front-and-rear direction of the body frame 21.

In this way, the intermediate joint 666 connects the tie rod 669 and the pitman arm 663 together so as to turn about an axis which extends in the up-and-down direction of the body frame 21 and an axis which extends in the front-and-rear direction of the body frame 21.

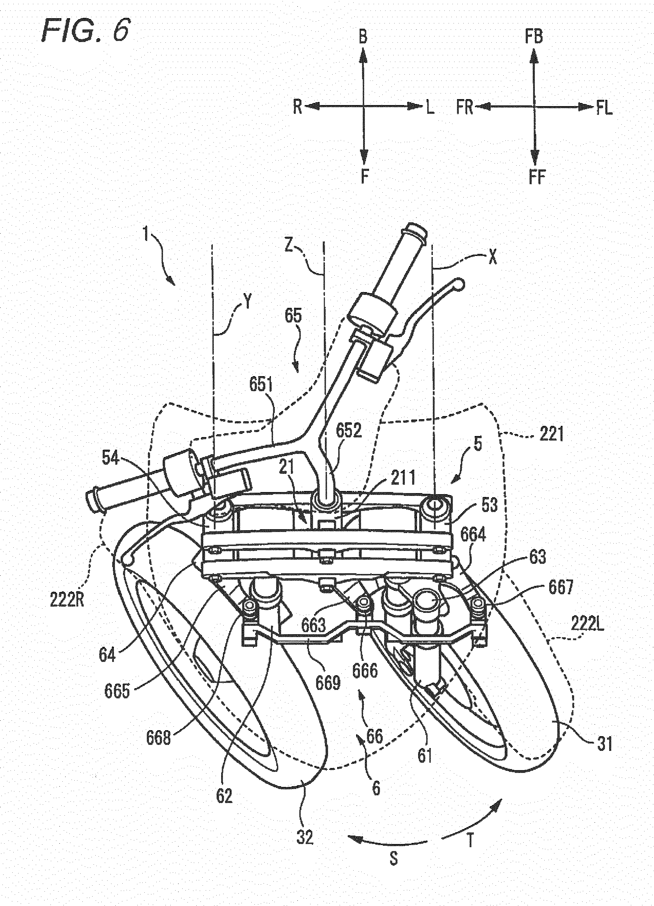

Next, referring to Figs. 5 and 6, a steering operation of the vehicle 1 will be described. Fig. 6 is a plan view of the front part of the vehicle 1 as viewed from thereabove in the up-and-down direction of the body frame 21 with the left front wheel 31 and the right front wheel 32 turned to the left. In Fig. 6, the body frame 21 is in the upright state. The following description to be made while referring to Fig. 6 is based on the premise that the body frame 21 is in the upright state. Fig. 6 shows a state which is seen through the front cover 221, the left mudguard 222L and the right mudguard 222R which are shown by dashed lines.

When the rider operates the handlebar 651, the steering shaft 652 turns about the intermediate turning axis Z relative to the headpipe 211. In the case of the front wheels being turned to the left as shown in Fig. 6, the steering shaft 652 turns in a direction indicated by an arrow T. In association with the turning of the steering shaft 652, the pitman arm 663 turns in the direction of the arrow T relative to the headpipe 211 about the intermediate steering axis Z.

In association with the turning of the pitman arm 663 in the direction of the arrow T, the intermediate joint 666 of the tie rod 669 turns relative to the pitman arm 663 in a direction indicated by an arrow S. This causes the tie rod 669 to move to the left in the left-and-right direction of the body frame 21 and to the rear in the front-and-rear direction of the body frame 21 while maintaining its posture.

In association with the movement of the tie rod 669, the left joint 667 and the right joint 668 of the tie rod 669 turn in the direction of the arrow S relative to the left transmission plate 664 and the right transmission plate 665, respectively. This turns the left transmission plate 664 and the right transmission plate 665 in the direction of the arrow T while allowing the tie rod 669 to maintain its posture.

When the left transmission plate 664 turns in the direction of the arrow T, the left bracket 63, which is not able to turn relative to the left transmission plate 664, turns in the direction of the arrow T about the left turning axis X relative to the left side member 53.

When the right transmission plate 665 turns in the direction of the arrow T, the right bracket 64, which is not able to turn relative to the right transmission plate 665, turns in the direction of the arrow T about the right turning axis Y relative to the right side member 54.

When the left bracket 63 turns in the direction of the arrow T, the left shock absorbing device 61, which is supported on the left bracket 63, turns in the direction of the arrow T about the left turning axis X relative to the left side member 53. When the left shock absorbing device 61 turns in the direction of the arrow T, the left front wheel 31, which is supported on the left shock absorbing device 61 by way of the left supporting portion 61b, turns in the direction of the arrow T about the left turning axis X relative to the left side member 53. As this occurs, the left mudguard 222L also turns in the direction of the arrow T together with the left front wheel 31.

When the right bracket 64 turns in the direction of the arrow T, the right shock absorbing device 62, which is supported on the right bracket 64, turns in the direction of the arrow T about the right turning axis Y relative to the right side member 54. When the right shock absorbing device 62 turns in the direction of the arrow T, the right front wheel 32, which is supported on the right shock absorbing device 62 by way of the right supporting portion 62b, turns in the direction of the arrow T about the right turning axis Y relative to the right side member 54. As this occurs, the right mudguard 222R also turns in the direction of the arrow T together with right front wheel 32.

When the rider operates the handlebar 651 so as to turn it to the right, the elements described above turn in opposite directions to the directions in which they turn when the handlebar 651 is operated to be turned to the left. Since the elements merely move the other way around in relation to the left-and-right direction, the detailed description thereof will be omitted here.

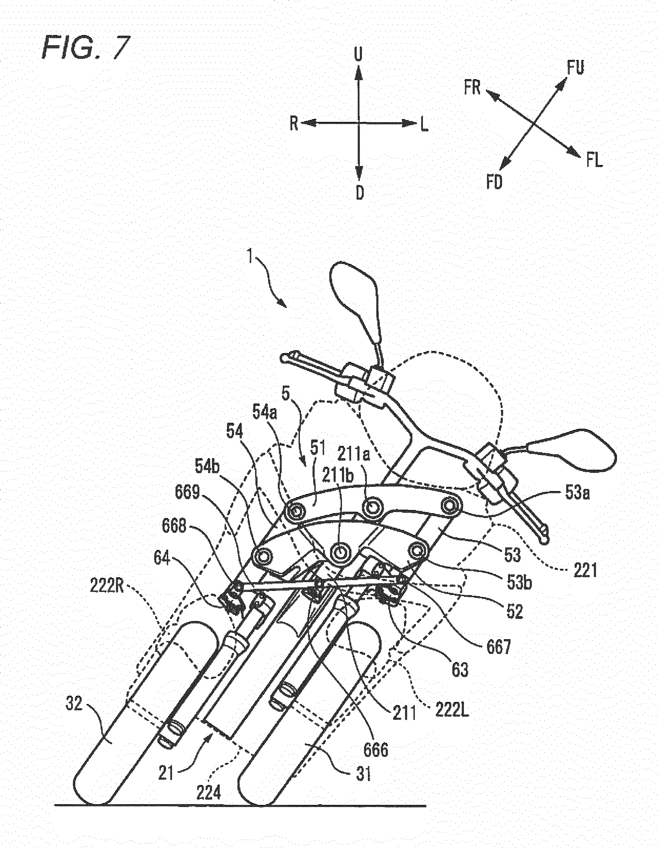

Next, referring to Figs. 2 and 7, a leaning operation of the vehicle 1 will be described. Fig. 7 is a front view of the front portion of the vehicle 1 as seen from the front in the front-and-rear direction of the body frame 21 with the body frame 21 caused to lean to the left of the vehicle 1. Fig. 7 shows a state which is seen through the front cover 221, the left mudguard 222L, the right mudguard 222R and the leg shield 224 which are shown by dashed lines.

As shown in Fig. 2, when the vehicle 1 is seen from the front of the body frame 21 with the body frame 21 resting in the upright state, the link mechanism 5 has a rectangular shape. As shown in Fig. 7, when the vehicle 1 is seen from the front of the body frame 21 with the body frame 21 caused to lean, the link mechanism 5 has a parallelogram shape. The operation of the link mechanism 5 is interlocked with the leaning of the body frame 21 in the left-and-right direction. The operation of the link mechanism 5 means that the upper cross member 51, the lower cross member 52, the left side member 53 and the right side member 54 which make up the link mechanism 5 turn relative to one another about the turning axes which pass through the upper intermediate connecting portion 211a, the upper left connecting portion 53a, the upper right connecting portion 54a, the lower intermediate connecting portion 211b, the lower left connecting portion 53b and the lower right connecting portion 54b, respectively, whereby the shape of the link mechanism 5 changes.

For example, as shown in Fig. 7, when the rider causes the vehicle 1 to lean to the left, the headpipe 211 leans to the left from the vertical direction. When the headpipe 211 leans, the upper cross member 51 turns counterclockwise about the upper intermediate connecting axis which passes through the upper intermediate connecting portion 211a relative to the headpipe 211 when seen from the front of the vehicle 1. Similarly, the lower cross member 52 turns counterclockwise about the lower intermediate connecting axis which passes through the lower intermediate connecting portion 211b relative to the headpipe 211 when seen from the front of the vehicle 1. This causes the upper cross member 51 to move to the left in the left-and-right direction of the body frame 21 relative to the lower cross member 52.

By moving in the way described above, the upper cross member 51 turns counterclockwise about the upper left connecting axis which passes through the upper left connecting portion 53a and the upper right connecting axis which passes through the upper right connecting portion 54a relative to the left side member 53 and the right side member 54, respectively, when seen from the front of the vehicle 1. Similarly, the lower cross member 52 turns counterclockwise about the lower left connecting axis which passes through the lower left connecting portion 53b and the lower right connecting axis which passes through the lower right connecting portion 54b relative to the left side member 53 and the right side member 54, respectively, when seen from the front of the vehicle 1. This causes the left side member 53 and the right side member 54 to lean to the left of the vehicle 1 from the vertical direction while holding their postures parallel to the headpipe 211.

As this occurs, the lower cross member 52 moves to the left in the left-and-right direction of the body frame 21 relative to the tie rod 669. As a result of the lower cross member 52 moving in the way described above, the shaft portions that are provided at the respective front portions of the intermediate joint 666, the left joint 667 and the right joint 668 turn relative to the tie rod 669. This allows the tie rod 669 to hold a posture that is parallel to the upper cross member 51 and the lower cross member 52.

As the left side member 53 leans to the left of the vehicle 1, the left bracket 63 which is supported on the left side member 53 by way of the left turning member leans to the left of the vehicle 1. In association with the leftward leaning of the left bracket 63, the left shock absorbing device 61 that is supported on the left bracket 63 also leans to the left of the vehicle 1. As the left shock absorbing device 61 so leans, the left front wheel 31 which is supported on the left shock absorbing device 61 leans to the left of the vehicle 1 while holding its posture which is parallel to the headpipe 211.

As the right side member 54 leans to the left of the vehicle 1, the right bracket 64 which is supported on the right side member 54 by way of the right turning member leans to the left of the vehicle 1. In association with the leftward leaning of the right bracket 64, the right shock absorbing device 62 which is supported on the right bracket 64 also leans to the left of the vehicle 1. As the right shock absorbing device 62 so leans, the right front wheel 32 which is supported on the right shock absorbing device 62 leans to the left of the vehicle 1 while holding its posture which is parallel to the headpipe 211.

The descriptions of the leaning operations of the left front wheel 31 and the right front wheel 32 are made in relation to the vertical direction as a reference. However, when the vehicle 1 is operated to lean (when the link mechanism 5 is activated to operate), the up-and-down direction of the body frame 21 does not coincide with the vertical direction. In a case where the up-and-down direction of the body frame 21 is set as the reference, when the link mechanism 5 is activated to operate, the left front wheel 31 and the right front wheel 32 change their relative position in the up-and-down direction of the body frame 21. In other words, the link mechanism 5 changes the relative position of the left front wheel 31 and the right front wheel 32 in the up-and-down direction of the body frame 21 to thereby cause the body frame 21 to lean to the left or right of the vehicle 1 from the vertical direction.

When the rider causes the vehicle 1 to lean to the right, the elements lean to the right. Since the elements merely move the other way around in relation to the left-and-right direction, the detailed description thereof will be omitted here.

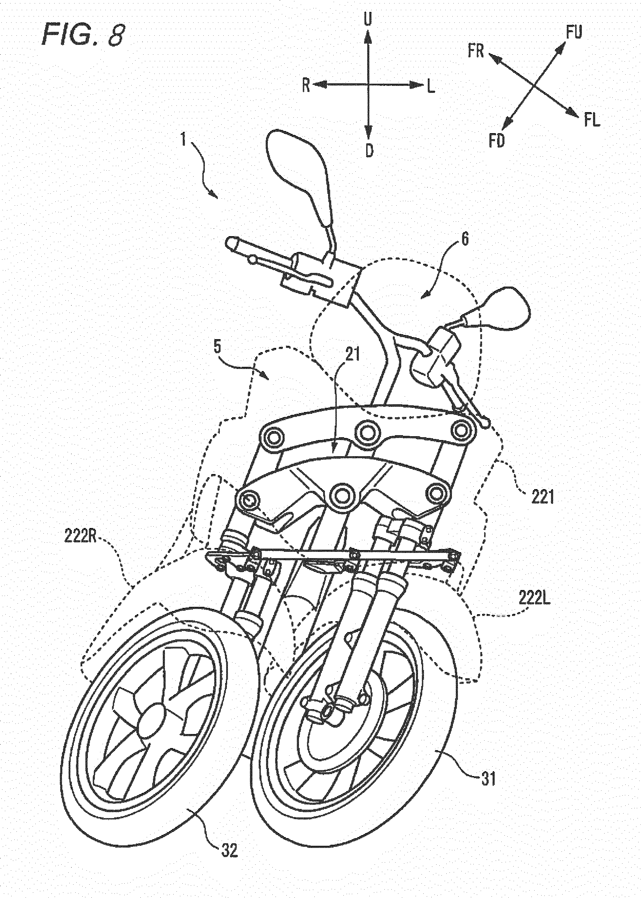

Fig. 8 is a front view of the front portion of the vehicle 1 when seen from the front thereof in the front-and-rear direction of the body frame 21 with the vehicle 1 caused to lean to the left and the front wheels 3 turned to the left. Fig. 8 shows a state which is seen through the front cover 221, the left mudguard 222L and the right mudguard 222R which are shown by dashed lines.

Thus, as has been described heretofore, the vehicle 1 according to this embodiment has:
the body frame 21;
the right front wheel 32 and the left front wheel 31 which are provided so as to be aligned side by side in the left-and-right direction of the body frame 21;
the right brake device 34 which can apply a brake force to the right front wheel 32;
the left brake device 33 which can apply a brake force to the left front wheel 31
the left grip portion 37 (an example of the grip portion) which the rider grips on; and
the steering force transmission mechanism 6 which transmits a steering force inputted into the left grip portion 37 to the right front wheel 32 and the left front wheel 31.

The steering force transmission mechanism 6 has:
the steering shaft 652 which can turn about the intermediate turning axis Z which extends in the up-and-down direction of the body frame 21;
the handlebar 651 which is provided at the upper portion of the steering shaft 652; and
the tie rod 669 which transmits the turn of the steering shaft 652 to the right front wheel 32 and the left front wheel 31.

The brake operating device which operates at least one of the right brake device 34 and the left brake device 33 and the grip portion 37, 38 are provided on at least one of the end portions of the handlebar 651. In the embodiment described heretofore, the right brake device 36 provided on the right end portion of the handlebar 651 operates the right brake device 34 and the left brake device 33.

According to the vehicle 1 of this embodiment, a rubber component 70 which suppresses the transmission of vibration attributed to a difference between a frictional force generated between the right front wheel 32 and a corresponding road surface and a frictional force generated between the left front wheel 31 and a corresponding road surface to the left grip portion 37 and the right grip portion 38 is provided on the steering force transmission mechanism 6. Next, the rubber component 70 will be described in detail.

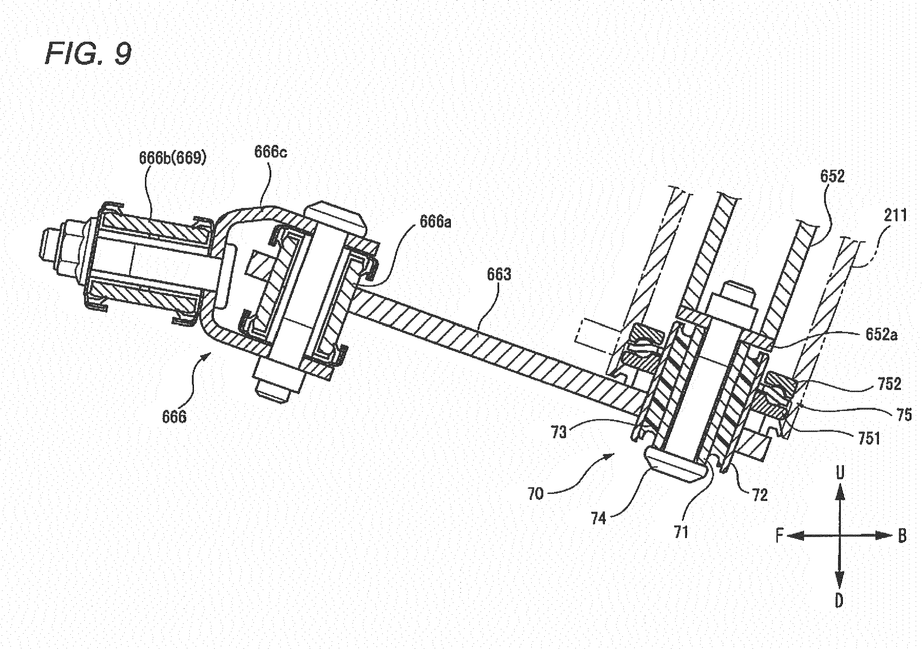

Fig. 9 is a side sectional view showing the lower portion of the steering shaft 652, a lower portion of the headpipe 211, the pitman arm 663, the intermediate joint 666 and the tie rod 669. As shown in Fig. 9, the lower portion of the steering shaft 652 is connected to the pitman arm 663 via the rubber component 70. Part of the rubber component 70 is inserted into an interior of the headpipe 211. The rubber component 70 has an inner tube portion 71 (an example of an inner member), an outer tube portion 72 (an example of an outer member) and a rubber portion 73.

The inner tube portion 71 is a tubular metallic member which extends along the intermediate turning axis Z. A bolt 74 is inserted through an interior of the inner tube portion 71. The bolt 74 fixes the inner tube portion 71 to the lower portion of the steering shaft 652. The bolt 74 is screwed into a bottom plate portion 652a of the steering shaft 652.

The outer tube portion 72 is a tubular metallic member which extends concentrically with the inner tube portion 71. A bore diameter of the outer tube portion 72 is larger than an outside diameter of the inner tube portion 71. The outer tube portion 72 is provided outside the inner tube portion 71. An outside diameter of the outer tube portion 72 is smaller than a bore diameter of the headpipe 211.

The outer tube portion 72 is supported on the headpipe 211 via a bearing 75. An inner race 751 of the bearing 75 is fixed to an outer circumferential surface of the outer tube portion 72. An outer race 752 of the bearing 75 is fixed to an inner wall of the headpipe 211. The outer tube portion 72 is allowed to turn relative to the headpipe 211 by the bearing 75.

The pitman arm 663 is fixed to the outer circumferential surface of the outer tube portion 72 below the bearing 75. The outer tube portion 72 is fixed so as not to be displaced relative to the pitman arm 663.

The rubber portion 73 fills at least part of a space defined between the inner tube portion 71 and the outer tube portion 72. The rubber portion 73 connects the inner tube portion 71 and the outer tube portion 72 together. The rubber portion 73 is formed of a rubber material having viscoelastic properties. The rubber portion 73 adheres strongly and rigidly to the inner tube portion 71 and the outer tube portion 72. For example, the rubber portion 73 can be fixed to the inner tube portion 71 and the outer tube portion 72 strongly and rigidly by seizing the rubber portion 73 to the inner tube portion 71 and the outer tube portion 72.

The inner tube portion 71 and the outer tube portion 72 can be displaced relative to each other by the rubber portion 73 being deformed elastically. The inner tube portion 71 and the outer tube portion 72 can be displaced relative to each other in the front-and-rear direction of the body frame 21 by the rubber portion 73 being deformed elastically. The inner tube portion 71 and the outer tube portion 72 can be displaced relative to each other in the front-and-rear direction of the body frame 21 and in the left-and-right direction of the body frame 21 by the rubber portion 73 being deformed elastically.

The inner tube portion 71 and the outer tube portion 72 extend along the intermediate turning axis Z. The intermediate turning axis Z is substantially parallel to the right extending and contracting axis of the right shock absorbing device 62 and the left extending and contracting axis of the left shock absorbing device 61. The inner tube portion 71 and the outer tube portion 72 can be displaced relative to each other about an axis which is substantially parallel to the left extending and contracting axis by the rubber portion 73 being deformed elastically.

When the rider turns the handlebar 651, the steering shaft 652 turns about the intermediate turning axis Z. Then, the inner tube portion 71 of the rubber component 70 which is fixed to the lower portion of the steering shaft 652 also turns together with the outer tube portion 72.

The outer tube portion 72 of the rubber component 70 is fixed to the pitman arm 663. The pitman arm 663 is connected to the left front wheel 31 and the right front wheel 32 via the tie rod 669 and the like. Since the left front wheel 31 is in contact with a road surface, a road surface resisting force acts on the left front wheel 31. Since the right front wheel 32 is in contact with a road surface, a road surface resisting force acts on the right front wheel 32. Owing to this, in order to displace the tie rod 669, at least a force which overcomes the road surface resisting forces of the left front wheel 31 and the right front wheel 32 needs to act on the tie rod 669.

In the case of the inner tube portion 71 being turned within a range of a predetermined angle relative to the outer tube portion 72, the rubber portion 73 is elastically deformed. As this occurs, although the inner tube portion 71 turns, the outer tube portion 72 does not turn relative to the inner tube portion 71. Owing to this, the pitman arm 663 does not turn.

When a force which is great enough to displace the tie rod 669 is inputted into the inner tube portion 71, the inner tube portion 71 is turned equal to or greater than the predetermined angle relative to the outer tube portion 72. Then, the rubber portion 73 cannot be deformed elastically more than that, and the outer tube portion 72 also turns in association with the turning of the inner tube portion 71 and the rubber portion 73. When the outer tube portion 72 turns, the pitman arm 663 which is fixed to the outer tube portion 72 turns, whereby the left front wheel 31 and the right front wheel 32 are turned via the tie rod 669.

In this way, the rubber component 70 does not transmit the displacement of the steering shaft 652 to the pitman arm 663 in case a relative angle of the inner tube portion 71 to the outer tube portion 72 stays within the range of the predetermined angle. When considering an opposite force transmission path, even though the outer tube portion 72 is displaced relative to the inner tube portion 71 within the range of the predetermined angle by vibration of the pitman arm 663, the rubber component 70 does not transmit the vibration of the pitman arm 663 to the steering shaft 652. Namely, the rubber component 70 provides a damper or shock absorbing function between the steering shaft 652 and the pitman arm 663. The rubber portion 73 of the rubber component 70 absorbs the relative displacement of the steering shaft 652 to the pitman arm 663 about an axis which is parallel to the right extending and contracting axis.

The elastic displacement of the rubber portion 73 of the rubber component 70 enables the inner tube portion 71 and the outer tube portion 72 to be displaced relative to each other in the front-and-rear diction of the body frame 21 and in the left-and-right direction of the body frame 21. Owing to this, the rubber component 70 absorbs the relative displacement of the steering shaft 652 to the pitman arm 663 not only in the front-and-rear direction of the body frame 21 but also in the left-and-right direction of the body frame 21.

The properties of the shock absorbing function can be controlled by controlling the viscoelastic properties of the rubber portion 73 of the rubber component 70.

Incidentally, since the right front wheel 32 and the left front wheel 31 pass on different road surfaces, a frictional force generated between the right front wheel 32 and the corresponding road surface differs from a frictional force generated between the left front wheel 31 and the corresponding road surface in many cases . Since road surfaces on which the right front wheel 32 and the left front wheel 31 pass change moment by moment while the vehicle 1 is running, frictional forces acting on the right front wheel 32 and the left front wheel 31 also change moment by moment. When a frictional force generated between the right front wheel 32 and a corresponding road surface differs from a frictional force generated between the left front wheel 31 and a corresponding road surface, vibration is generated in the tie rod 669 which is connected to the right front wheel 32 and the left front wheel 31.

The tie rod 669 is connected to the steering shaft 652. Owing to this, the vibration of the tie rod 669 is transmitted to the left grip portion 37 and the right grip portion 38 via the steering shaft 652 and the handlebar 651. When the left grip portion 37 and the right grip portion 38 are vibrated, there are fears that the rider feels a sensation of discomfort. In particular, since the rider grips strongly on the left grip portion 37 and the right grip portion 38 when applying the brakes, vibration attributed to the different behaviors of the right front wheel 32 and the left front wheel 31 which are made when applying the brakes tends to be transmitted easily to the left grip portion 37 and the right grip portion 38.

According to the vehicle 1 of this embodiment, as has been described above, the rubber component 70 provides the shock absorbing function between the steering shaft 652 and the pitman arm 663. The rubber component 70 can restrain the vibration transmitted from the right front wheel 32 and the left front wheel 31 to the pitman arm 663 from being transmitted to the steering shaft 652. Owing to this, the rubber component 70 can restrain the vibration from being transmitted to the steering shaft 652 which is fixed to the handlebar 651.

In this way, the rubber component 70 suppresses the transmission of the vibration attributed to the difference between the frictional force generated between the right front wheel 32 and the corresponding road surface and the frictional force generated between the left front wheel 31 and the corresponding road surface to the left grip portion 37 and the right grip portion 38. This makes it difficult for the vibration to be transmitted to the rider who grips on the left grip portion 37 and the right grip portion 38 when attempting to apply the brakes.

Vibration like this is not generated in a vehicle having a single front wheel. On the vehicle having the single front wheel, only the vibration of the front wheel is transmitted to grip portions. The vehicle 1 according to this embodiment has the right front wheel 32 and the left front wheel 31, and the right front wheel 32 and the left front wheel 31 are connected together by the tie rod 669. When the right front wheel 32 and the left front wheel 31 pass on different road surfaces and display different behaviors, vibration of the right front wheel 32 and vibration of the left front wheel 31 act individually on the tie rod 669. As a result of that, vibration of a different mode from a vibration mode generated by the front wheel of the vehicle having the single front wheel acts on the right grip portion 38 and the left grip portion 37.

For example, in the vibration of the front wheel of the vehicle, a component acting in the up-and-down direction of the body frame is dominant.

In the vehicle having the single front wheel, the component in the up-and-down direction of the front wheel is absorbed efficiently by a shock absorber which acts in the up-and-down direction.

However, the vibration of the front wheel includes a component acting in the front-and-rear direction and a component acting in the left-and-right direction in addition to the component acting in the up-and-down direction of the body frame. The front-and-rear direction of the body frame and the left-and-right direction of the body frame are directions which intersect the direction in which the shock absorber operates. Owing to this, it is difficult for the shock absorbers to absorb the vibration component in the front-and-rear direction and the vibration component in the left-and-right direction with good efficiency.

Incidentally, in the vehicle including the right front wheel and the left front wheel, a vibration component in the front-and-rear direction and a vibration component in the left-and-right direction are inputted from the right front wheel and the left front wheel into the steering force transmission path. In the steering force transmission path, a steering force inputted into the handlebar is transmitted to the steering shaft, the pitman arm and the tie rod and is then divided to be transmitted to the right front wheel and the left front wheel.

When considering an opposite transmission path, vibration inputted into the right front wheel and vibration inputted into the left front wheel are combined together at the tie rod, and the combined vibration is then transmitted to the tie rod, the pitman arm, the steering shaft and the handlebar.

There may be a case where the vibration component in the front-and-rear direction and the vibration component in the left-and-right direction which are inputted into the right front wheel and the left front wheel and which the shock absorber has difficulty in absorbing are combined together at the tie rod to be amplified. Then, there may be a situation where the amplified vibration is transmitted to a steering force transmission path which is situated upstream of the tie rod and the vibration of a great magnitude acts on the grip portions provided on the handlebar. The inventor has noticed that with the vehicle including the right front wheel and the left front wheel, as described above, the vibration in the front-and-rear direction and the vibration in the left-and-right direction which are inputted into the front wheels are likely to be amplified for transmission to the grip portions.

Please note that with the vehicle having the single front wheel, since the vibration in the front-and-rear direction and the vibration in the left-and-right direction which are inputted into the front wheel are not amplified, the problem described above is not caused.

Then, according to the vehicle 1 of this embodiment, the rubber component 70 is provided between the steering shaft 652 and the pitman arm 663. The rubber component 70 restrains the vibration combined at the tie rod 669 from being transmitted from the pitman arm 663 to the steering shaft 652. The rubber component 70 absorbs the relative displacement of the pitman arm 663 to the steering shaft 652. The relative displacement of the outer tube portion 72 which is fixed to the pitman arm 663 to the inner tube portion 71 which is fixed to the steering shaft 652 is absorbed by the rubber portion 73 of the rubber component 70 being elastically deformed.

The rubber portion 73 of the rubber component 70 is interposed between the outer circumferential surface of the inner tube portion 71 and an inner circumferential surface of the outer tube portion 72. Owing to this, as a result of the rubber portion 73 being deformed elastically, it is possible to suppress effectively the generation of vibration in the front-and-rear direction of the body frame 21, vibration in the left-and-right direction of the body frame 21 and vibration about the intermediate turning axis Z in the inner tube portion 71 fixed to the steering shaft 652 and the outer tube portion 72 fixed to the pitman arm 663.

From these reasons, it is possible to suppress effectively the transmission of the vibration of the right front wheel 32 and the vibration of the left front wheel 31 to the right grip portion 38 and the left grip portion 37 by the rubber component 70.

It should be noted that the vibration described here is not generated in a general four-wheeled vehicle having a steering wheel. The vibration is generated when the rider grips on the brake operating devices . The drawback provided by the vibration is a characteristic phenomenon in the vehicle having the two front wheels in which the brake operating devices are provided on the grip portions. In the general four-wheeled vehicle, since no hand is used to apply the brakes, there is no such situation that the vibration is transmitted to the driver from gripping portions on the steering wheel.

In this embodiment, the steering force transmission mechanism 6 has the pitman arm 663 which is fixed to the steering shaft 652 at the one end and is connected to the tie rod 669 so as to turn at the other end thereof. The rubber component 70 is provided between the steering shaft 652 and the pitman arm 663, and a steering force inputted into the left grip portion 37 and the right grip portion 38 is transmitted from the steering shaft 652 to the pitman arm 663 by way of the rubber component 70.

In the vehicle 1 according to this embodiment, the steering force transmission path is made up of, sequentially from an upstream side towards a downstream side thereof, the left grip portion 37 and the right grip portion 38, the handlebar 651, the steering shaft 652, the pitman arm 663, the tie rod 669, the left transmission plate 664 and the right transmission plate 665, the left shock absorbing device 61 and the right shock absorbing device 62, and the left front wheel 31 and the right front wheel 32.

In the steering force transmission path, the rubber component 70 is provided on the members (the pitman arm 663 and the steering shaft 652) which are provided upstream of the member (the tie rod 669) where the vibration inputted into the right front wheel 32 and the vibration inputted into the left front wheel 31 are combined together. Owing to this, the vibration inputted into the right front wheel 32 and the vibration inputted into the left front wheel 31 can be prevented from being transmitted to the grip portions 37, 38 by the single rubber component 70.

In addition, according to the vehicle 1 of this embodiment, the rubber component 70 which is provided between the steering shaft 652 and the pitman arm 663 can suppress the vibration of the steering shaft 652, the handlebar 651, the left grip portion 37 and the right grip portion 38. These components are supported on the headpipe 211. Since the rubber component 70 can suppress the vibration of the steering shaft 652 and the like which are supported on the headpipe 211, it is possible to eliminate a risk of the vibration being transmitted from the steering shaft 652 and the like to the body frame 21 by way of the headpipe 211. This enhances the comfortableness of the rider.

The vehicle 1 according to this embodiment has:
the right shock absorbing device 62 which supports rotatably the right front wheel 32 and which supports the right front wheel 32 so as to be displaced relative to the body frame 21; and
the left shock absorbing device 61 which supports rotatably the left front wheel 31 and which supports the left front wheel 31 so as to be displaced relative to the body frame 21.

Even though the right shock absorbing device 62 and the left shock absorbing device 61 are provided on the vehicle 1, the transmission of the vibration attributed to the difference between the friction force generated between the right front wheel 32 and the corresponding road surface and the frictional force generated between the left front wheel 31 and the corresponding road surface to the left grip portion 37 and the right grip portion 38 cannot be suppressed effectively. As described above, the vibration components which attempt to displace the right front wheel 32 and the left front wheel 31 in the front-and-rear diction and the left-and-right direction of the body frame 21 cannot be suppressed effectively by the right shock absorbing device 62 which supports the right front wheel 32 so as to be displaced in the up-and-down direction and the left shock absorbing device 61 which supports the left front wheel 31 so as to be displaced in the up-and-down direction.

In addition, since the vibration displaces the right shock absorbing device 62 together with the right front wheel 32 and also displaces the left shock absorbing device 61 together with the left front wheel 31, the weight of the components which are displaced becomes great. In the event that the vibration of these heavy components is transmitted to the light-weight handlebar 651, the amplitude of the vibration is increased, leading to a fear that a sensation of discomfort that the rider feels is enhanced.

However, the vehicle 1 according to this embodiment, even though the left shock absorbing device 61 and the right shock absorbing device 62 are mounted in the way described above, since the vehicle 1 has the rubber component 70, the vibration can be restrained from being transmitted to the left grip portion 37 and the right grip portion 38 efficiently, thereby making it possible to reduce the sensation of discomfort felt by the rider.

Incidentally, the inner tube portion 71 and the outer tube portion 72 can turn relative to each other about the axis which follows the intermediate turning axis Z. Incidentally, the intermediate turning axis Z is substantially parallel to the right extending and contracting axis of the right shock absorbing device 62 and the left extending and contracting axis of the left shock absorbing device 61. Namely, the inner tube portion 71 and the outer tube portion 72 can turn relative to each other in the front-and-rear direction and the left-and-right direction of the body frame 21 and the axis which follows the right extending and contracting axis as long as the rubber portion 73 is deformed elastically.

According to the vehicle 1 of this embodiment, since the rubber component 70 can be displaced in the front-and-rear direction of the body frame 21, it is possible to absorb the vibration in the front-and-rear direction of the body frame 21.

According to the vehicle 1 of this embodiment, since the rubber component 70 can be displaced in the left-and-right direction of the body frame 21, it is possible to absorb the vibration in the left-and-right direction of the body frame 21.

According to the vehicle 1 of this embodiment, the rubber component 70 has the outer tube portion 71 and the inner tube portion 72 which extend along the right extending and contracting direction and the left extending and contracting direction and the rubber portion 73 which is interposed between the outer tube portion 71 and the inner tube portion 72. Owing to this, the relative displacement of the outer tube portion 71 to the inner tube portion 72 in relation to the front-and-rear direction and the left-and-right direction of the body frame 21 by the rubber portion 73 being deformed elastically.

According to the vehicle 1 of this embodiment, since the rubber component 70 can be displaced about the axis which follows the right extending and contracting axis and the left extending and contracting axis, the rubber component 70 can suppress the vibration acting in the direction in which the right shock absorbing device 62 and the left shock absorbing device 61 have difficulty in absorbing vibration. Since the vehicle 1 according to this embodiment has the rubber component 70, the right shock absorbing device 62 and the left shock absorbing device 61, it is difficult for the vibration attributed to the left front wheel 31 and the right front wheel 32 to be transmitted to the rider.

In the vehicle 1 according to this embodiment, the link mechanism 5 has the upper cross member 51 and the lower cross member 52 (an example of a cross member) which are supported on the body frame 21 so as to turn about the link axes which extend in the front-and-rear direction of the body frame 21. The link mechanism 5 supports the right front wheel 32 and the left front wheel 31 so as to be displaced relative to the body frame 21 in relation to the up-and-down direction of the body frame 21, whereby the link mechanism 5 causes the body frame 21 to lean to the right of the vehicle 1 when the vehicle 1 is turned to the right and causes the body frame 21 to leans to the left when the vehicle 1 is turned to the left.

The vibration of the right front wheel 32 and the left front wheel 31 tends to be transmitted easily to the body frame 21, the handlebar 651 which is supported on the body frame 21 so as to turn and the grip portions 37, 38 provided on the handlebar 651 via the link mechanism 5. Since the link mechanism 5 is made up of the highly rigid members, it is difficult for vibration transmitted to the link mechanism 5 to be absorbed. Owing to this, in the vehicle 1 including the link mechanism 5, the vibration of the right front wheel 32 and the left front wheel 31 tends to be transmitted easily to the grip portions 37, 38. In addition, since the upper cross member 51 and the lower cross member 52 turn about the link axes which extend in the front-and-rear direction of the body frame 21, the link mechanism 5 has difficulty in suppressing the vibration of the right front wheel 32 and the left front wheel 31 acting in the front-and-rear direction. According to the configuration described above, even with the vehicle 1 including the link mechanism 5 described above, the vibration of the right front wheel 32 and the left front wheel 31 acting in the front-and-rear direction can be restrained effectively from being transmitted to the grip portions 37, 38 by the rubber component 70.

In the vehicle 1 according to this embodiment, the link mechanism 5 has:
the right side member 54 which is supported so as to turn about the right axis which extend in the front-and-rear direction of the body frame 21 at the right portions of the cross members (the upper cross member 51 and the lower cross member 52) and which supports the right front wheel 32 so as to turn about the right turning axis Y which extends in the up-and-down direction of the body frame 21; and
the left side member 53 which is supported so as to turn about the left axis which extend parallel to the right axis at the left portion of the cross members (the upper cross member 51 and the lower cross member 52) and which supports the left front wheel 31 so as to turn about the left turning axis X which is parallel to the right turning axis Y.

The parallelogram link mechanism 5 has the left side member 53 and the right side member 54 which operate while maintaining the parallel relationship to each other, as described above. The left side member 53 supports the left front wheel 31 so as to turn about the left turning axis X. The right side member 54 supports the right front wheel 32 so as to turn about the right turning axis Y.

The left side member 53 and the right side member 54 need to transmit the steering angle inputted into the handlebar 651 accurately to the left front wheel 31 and the right front wheel 32. Owing to this, the left side member 53 needs to support the left front wheel 31 with high supporting rigidity so that the turning axis of the left front wheel 31 does not deviate from the left turning axis X. The right side member 54 needs to support the right front wheel 32 with high supporting rigidity so that the turning axis of the right front wheel 32 does not deviate from the right turning axis Y.

These requests make it difficult to provide the shock absorbing devices between the left side member 53 and the left front wheel 31 and between the right side member 54 and the right front wheel 32. Owing to this, vibration generated in the left front wheel 31 and the right front wheel 32 tends to be transmitted easily to the vehicle 1 through the left side member 53 and the right side member 54.

In the vehicle 1 according to this embodiment, however, the rubber component 70 is provided on the steering force transmission mechanism 6. Owing to this, the vibration can be restrained from being transmitted to the left grip portion 37 and the right grip portion 38 while the left side member 53 supports the left front wheel 31 with the high supporting rigidity and the right side member 54 supports the right front wheel 32 with the high supporting rigidity.

### <Second Embodiment>

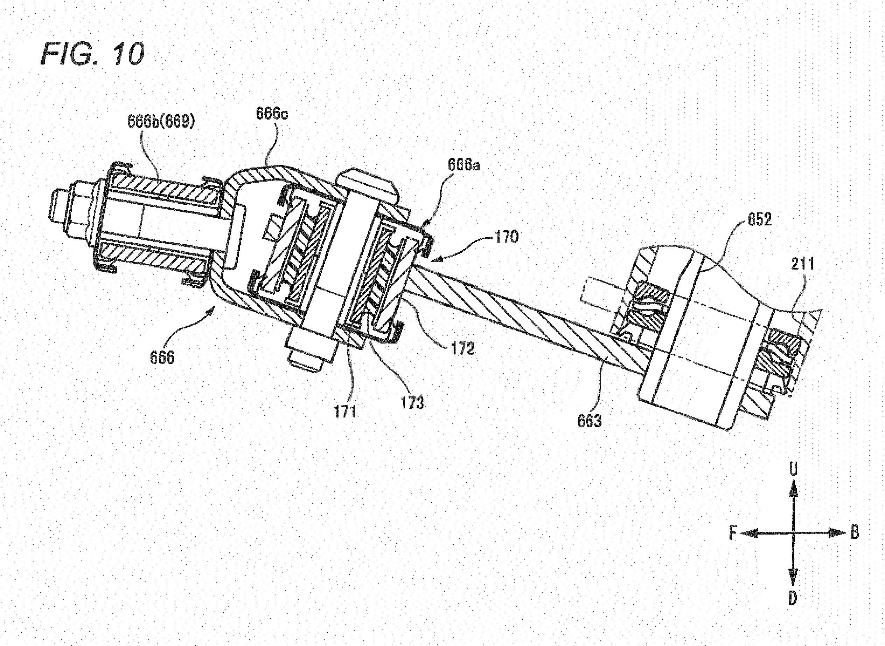

While the rubber component 70 is described as being provided between the steering shaft 652 and the pitman arm 663 in the first embodiment, the invention is not limited thereto. Fig. 10 is a view, corresponding to Fig. 9, which shows a vehicle 1 according to a second embodiment.

As shown in Fig. 10, a steering force transmission mechanism 6 has a pitman arm 663 which is fixed to a steering shaft 652 at one end and is connected to a tie rod 669 so as to turn at the other end thereof. A rubber component 170 is provided between the tie rod 669 and the pitman arm 663. In the vehicle 1 according to this embodiment, a steering force inputted into a left grip portion 37 and a right grip portion 38 is transmitted from the pitman arm 663 to the tie rod 669 by way of the rubber component 170.

The rubber component 170 has an inner tube portion 171, an outer tube portion 172 and a rubber portion 173. The outer tube portion 172 can turn about an axis which is parallel to an intermediate turning axis Z relative to the inner tube portion 171. The rubber portion 173 fills at least part of a space defined between the inner tube portion 171 and the outer tube portion 172 to thereby connect the inner tube portion 171 and the outer tube portion 172 together. The rubber portion 173 is formed of a rubber material having viscoelastic properties.

The rubber component 170 is incorporated in an intermediate rear bearing 666a of an intermediate joint 666 . The inner tube portion 171 is fixed to a shaft portion of the intermediate rear bearing 666a. The outer tube portion 172 is fixed to a front end portion of the pitman arm 663.

When the rider turns a handlebar 651, the steering shaft 652 and the pitman arm 663 turn about the intermediate turning axis Z. Then, the outer tube portion 172 of the rubber component 170 which is fixed to the front end portion of the pitman arm 663 is displaced relative to the inner tube portion 171 as long as the rubber portion 173 is deformed elastically.

When a force which is great enough to displace the tie rod 669 is inputted into the outer tube portion 172 and the outer tube portion 172 is turned relative to the inner tube portion 171 within a range of a predetermined angle, the rubber portion 173 is deformed elastically. In this case, although the outer tube portion 172 is displaced eccentrically relative to the inner tube portion 171, the inner tube portion 171 and the intermediate joint 666 remain stationary. The outer tube portion 172 is displaced in a plane which intersects the intermediate turning axis Z along which the inner tube portion 171 extends, that is, in a front-and-rear direction and a left-and-right direction of a body frame 21 relative to the inner tube portion 171.

When the outer tube portion 172 is turned the predetermined angle or greater relative to the inner tube portion 171, the rubber portion 173 cannot be deformed elastically any more, whereby the inner tube portion 171 is displaced in association with the turning of the outer tube portion 172 and the rubber portion 173, and the inner tube portion 171 and the intermediate joint 666 are displaced to the left or right. Then, a left front wheel 31 and a right front wheel 32 are turned via the tie rod 669 which is connected to the intermediate joint 666.

In this way, in case the relative angle between the inner tube portion 171 and the outer tube portion 172 stays within the predetermined angle, the rubber component 170 does not transmit the displacement of the pitman arm 663 to the tie rod 669. When considering an opposite force transmission path, even though the inner tube portion 171 is displaced relative to the outer tube portion 172 within the range of the predetermined angle due to vibration of the tie rod 669, the rubber component 170 does not transmit the vibration of the tie rod 669 to the pitman arm 663. Namely, the rubber component 170 provides a shock absorbing function between the pitman arm 663 and the tie rod 669. The displacement of the outer tube portion 172 in a plane which intersects the intermediate turning axis Z at right angles (the plane being also defined by the front-and-rear direction and the left-and-right direction of the body frame 21) relative to the inner tube 171 is absorbed by the rubber portion 173 being deformed elastically. The properties of the shock absorbing function can be controlled by controlling the viscoelastic properties of the rubber portion 173 of the rubber component 170.

According to the vehicle 1 of this embodiment, the rubber component 170 can restrain the vibration transmitted from the right front wheel 32 and the left front wheel 31 to the tie rod 669 from being transmitted to the pitman arm 663. Owing to this, the rubber component 170 can restrain the vibration from being transmitted from the pitman arm 663 to the handlebar 651 by way of the steering shaft 652.

In this way, the rubber component 170 suppresses the transmission of the vibration attributed to a difference between a frictional force generated between the right front wheel 32 and a corresponding road surface and a frictional force generated between the left front wheel 31 and a corresponding road surface to the left grip portion 37 and the right grip portion 38. This makes it difficult for the vibration to be transmitted to the rider who grips on the left grip portion 37 and the right grip portion 38 when attempting to apply the brakes.

According to the vehicle 1 of this embodiment, since the vibration can be suppressed in the position lying near the right front wheel 32 and the left front wheel 31 which constitute a source of vibration, it is possible to suppress the vibration of the pitman arm 663, the steering shaft 652 and the handlebar 651 which are provided upstream of the tie rod 669 in the steering force transmission path.

### <Third Embodiment>

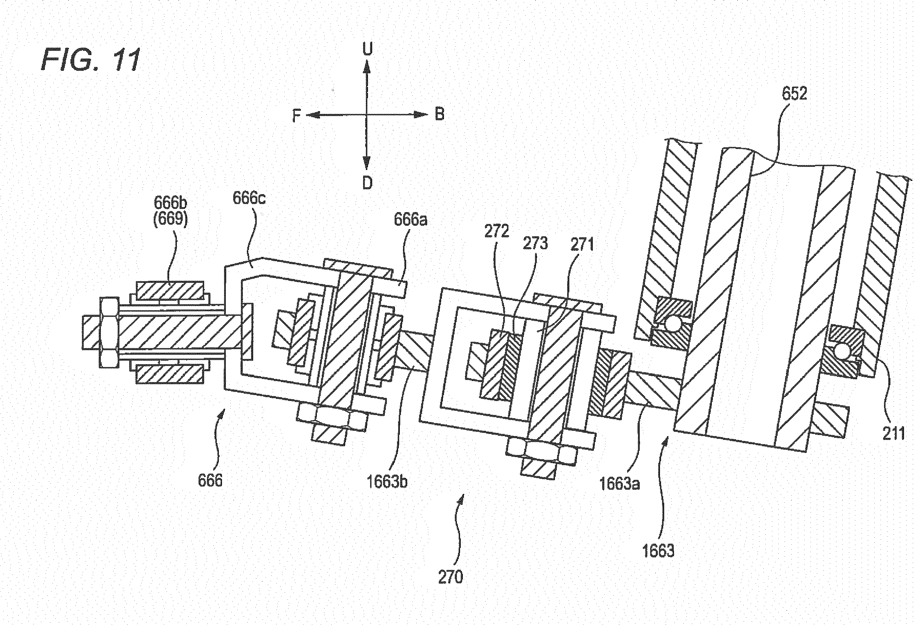

Fig. 11 is a view showing a rubber component 270 of a vehicle 1 according to a third embodiment. As shown in Fig. 11, the rubber component 270 may be incorporated into a pitman arm 1663. In this embodiment, the pitman arm 1663 is made up of two components which are a rear portion 1663a and a front portion 1663b. The rear portion 1663a is fixed to a lower portion of a steering shaft 652. The front portion 1663b is connected to a tie rod 669 via an intermediate joint 666. The rubber portion 270 is provided between the rear portion 1663a and the front portion 1663b.

The rubber component 270 has an inner tube portion 271, an outer tube portion 272 and a rubber portion 273. The outer tube portion 272 can turn about an axis which is parallel to an intermediate turning axis Z relative to the inner tube portion 271. The rubber portion 273 fills at least part of a space defined between the inner tube portion 271 and the outer tube portion 272 to thereby connect the inner tube portion 271 and the outer tube portion 272 together. The rubber portion 273 is formed of a rubber material having viscoelastic properties.

The rubber component 270 is incorporated in the pitman arm 1663. The inner tube portion 271 is fixed to the front portion 1663b of the pitman arm 1663. The outer tube portion 272 is fixed to the rear portion 1663a of the pitman arm 1663.

When the rider turns a handlebar 651, the steering shaft 652 and the rear portion 1663a of the pitman arm 1663 turn about the intermediate turning axis Z. Then, the outer tube portion 272 of the rubber component 270 which is fixed to the rear portion 1663a of the pitman arm 1663 is displaced relative to the inner tube portion 271.

When a force which is great enough to displace the tie rod 669 is inputted into the outer tube portion 272 and the outer tube portion 272 is displaced relative to the inner tube portion 271 within a range of a predetermined amount of displacement, the rubber portion 273 is deformed elastically. In this case, although the outer tube portion 272 is displaced, the inner tube portion 271 and the front portion 1663b of the pitman arm 1663 remain stationary.

When the outer tube portion 272 is displaced the predetermined amount of displacement or greater relative to the inner tube portion 271, the rubber portion 273 cannot be deformed elastically any more. Then, the inner tube portion 271 is caused to move in association with the displacement of the outer tube portion 272 and the rubber portion 273, and the inner tube portion 271 and the front portion 1663b of the pitman arm 1663 are displaced to the left or right. Then, a left front wheel 31 and a right front wheel 32 are turned by way of the front portion 1663b of the pitman arm 1663, the intermediate joint 666 and the tie rod 669.

In this way, in case the relative displacement amount between the inner tube portion 271 and the outer tube portion 272 stays within the predetermined amount of displacement, the rubber component 270 does not transmit the displacement of the rear portion 1663a to the front portion 1663b of the pitman arm 1663. When considering an opposite force transmission path, even though the front portion 1663b of the pitman arm 1663 and the inner tube portion 271 are displaced relative to the outer tube portion 272 within the range of the predetermined amount of displacement by the vibration of the tie rod 669, the rubber component 270 does not transmit the vibration of the tie rod 669 to the rear portion 1663a of the pitman arm 1663. Namely, the rubber component 270 provides a shock absorbing function between the front portion 1663b and the rear portion 1663a of the pitman arm 1663. The properties of the shock absorbing function can be controlled by controlling the viscoelastic properties of the rubber portion 273 of the rubber component 270.

According to the vehicle 1 of this embodiment, the rubber component 270 can restrain the vibration transmitted from the right front wheel 32 and the left front wheel 31 to the tie rod 669 from being transmitted to the rear portion 1663a of the pitman arm 1663. Owing to this, the rubber component 270 can restrain the vibration from being transmitted from the rear portion 1663a of the pitman arm 1663 to the handlebar 651 by way of the steering shaft 652.

In this way, the rubber component 270 suppresses the transmission of the vibration attributed to a difference between a frictional force generated between the right front wheel 32 and a corresponding road surface and a frictional force generated between the left front wheel 31 and a corresponding road surface to grip portions. This makes it difficult for the vibration to be transmitted to the rider who grips on the left grip portion 37 and the right grip portion 38 when attempting to apply the brakes.

### <Fourth Embodiment>

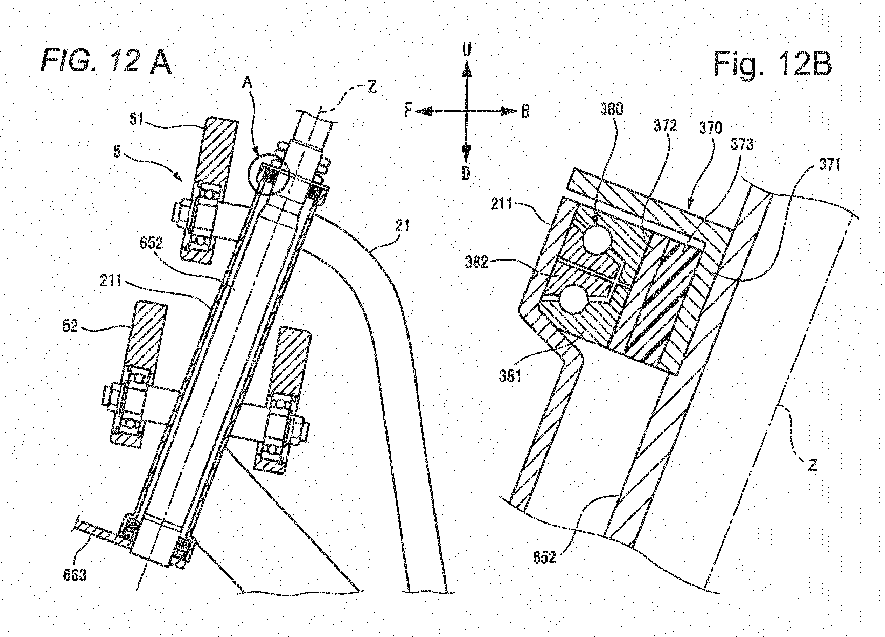

Fig. 12 is a view showing a rubber component 370 of a vehicle 1 according to a fourth embodiment. Fig. 12 shows side sectional views of a headpipe 211. Fig. 12A shows the whole of the headpipe 211, and Fig. 12B is a view showing a portion A in Fig. 12A in an enlarged fashion. As shown in Figs. 12A and 12B, the rubber component 370 may be provided between the headpipe 211 and a steering shaft 652 .

The rubber component 370 has an inner tube portion 371, an outer tube portion 372 and a rubber portion 373. The inner tube portion 371 is fixed to the steering shaft 652. The outer tube portion 372 is fixed to the headpipe 211. The outer tube portion 372 can turn about an intermediate turning axis Z relative to the inner tube portion 371. The rubber portion 373 fills at least part of a space defined between the inner tube portion 371 and the outer tube portion 372 to thereby connect the inner tube portion 371 and the outer tube portion 372 together. The rubber portion 373 is formed of a rubber material having viscoelastic properties.

The steering shaft 652 is supported on the head pipe 211 via a bearing 380. The inner tube portion 371 is fixed to an outer circumferential surface of the steering shaft 652. The outer tube portion 372 is fixed to an inner race 381 of the bearing 380. An outer race 382 of the bearing 380 is fixed to the headpipe 211. The rubber portion 373 is provided between the inner tube portion 371 and the outer tube portion 372.

When the rider turns a handlebar 651 from a certain angular position, the steering shaft 652 turns about the intermediate turning axis Z. Then, the inner tube portion 371 of the rubber component 370 which is fixed to the steering shaft 652 turns relative to the outer tube portion 372 within a range where the rubber portion 373 is deformed elastically.

When a force which is great enough to displace a tie rod 669 is inputted into the inner tube portion 371 and the inner tube portion 371 is turned relative to the outer tube portion 372 within a range of a predetermined angle, the rubber portion 373 is deformed elastically. In this case, although the inner tube portion 371 is displaced, the outer tube portion 372 remains stationary. A force required to displace the rubber portion 373 elastically is smaller than a rotational resisting force of the bearing 380. Owing to this, the rubber portion 373 is deformed elastically before the inner race 381 turns relative to the outer race 382 of the bearing 380. When the rider removes his or her hands from the handlebar 651, the handle bar 651 is returned to an initial angular position by means of an elastic restoration force generated by the rubber portion 373.

When the inner tube portion 371 is turned a predetermined angle or greater from a certain angular position relative to the outer tube portion 372, the rubber portion 373 cannot be elastically deformed any more, turning torque which attempts to turn the inner tube portion 371 overcomes the rotational resisting force of the bearing 380, whereby the outer tube portion 372 turns together with the inner tube portion 371.

Incidentally, vibration inputted into a right front wheel 32 is transmitted to an upper cross member 51 and a lower cross member 52 by way of a right shock absorbing device 62, a right turning member of a right bracket 64 and a right side member 54. Vibration inputted into a left front wheel 31 is transmitted to the upper cross member 51 and the lower cross member 52 by way of a left shock absorbing device 61, a left turning member of a left bracket 63 and a left side member 53. The vibration inputted into the right front wheel 32 and the vibration inputted into the left front wheel 31 are combined together and are amplified at the upper cross member 51 and the lower cross member 52. The vibration amplified at the upper cross member 51 and the lower cross member 52 is transmitted to grip portions 37, 38 by way of the headpipe 211, the steering shaft 652 and the handlebar 651.

According to the vehicle of this embodiment, the rubber component 370 is provided between the headpipe 211 and the steering shaft 652. Owing to this, it is possible to suppress the transmission of the amplified vibration from the headpipe 211 to the steering shaft 652. As has been described above, the components of the amplified vibration are in a front-and-rear direction of a body frame 21, a left-and-right direction of a body frame 21 and about an axis which is parallel to a right extending and contracting axis, which are difficult to attenuate by the right shock absorbing device 62 and the left shock absorbing device 61. The rubber component 370 is provided between the steering shaft 652 and the headpipe 211 which extend along the intermediate turning axis Z which is parallel to the right extending and contracting axis. The outer tube portion 372 of the rubber component 370 is fixed to the headpipe 211 and the inner tube portion 371 thereof is fixed to the steering shaft 652. The relative displacement between the headpipe 211 to which the outer tube portion 372 is fixed and the steering shaft 652 to which the inner tube portion 371 is fixed in the front-and-rear direction and the left-and-right direction of the body frame 21 and about the axis which is parallel to the right extending and contracting axis is absorbed by the rubber portion being deformed elastically.

Owing to this, even though the steering shaft 652 is displaced relative to the headpipe 211 within the range of the predetermined angle due to the vibration from the left front wheel 31 and the right front wheel 32, the rubber component 370 absorbs the vibration of the steering shaft 652. Namely, the rubber component 370 provides a damper or shock absorbing function between the steering shaft 652 and the headpipe 211. The properties of the shock absorbing function can be controlled by controlling the viscoelastic properties of the rubber portion 373 of the rubber component 370.

In this way, in the vehicle according to this embodiment,
the body frame 21 has the headpipe 211 through which the steering shaft 652 is inserted,
and the rubber component 370 is provided between the headpipe 211 and the steering shaft 652.

With the vehicle 1 according to this embodiment, since the rubber component 370 is provided in an interior of the headpipe 211, there is no need to provide a space where to provide the rubber component 370. Since this obviates the necessity of modifying the components layout adopted in existing vehicles, the design of the vehicle can be facilitated.

### <Fifth Embodiment>

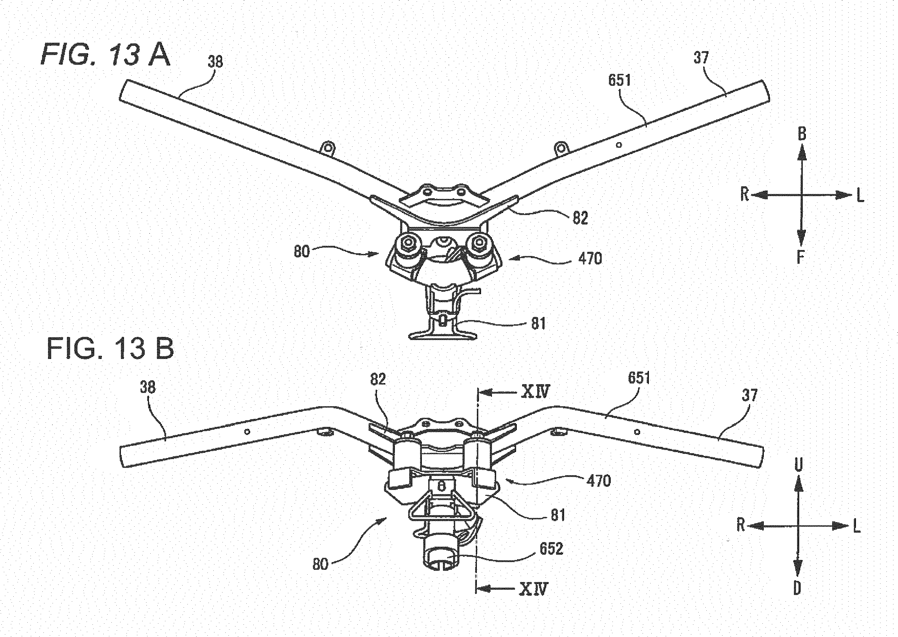

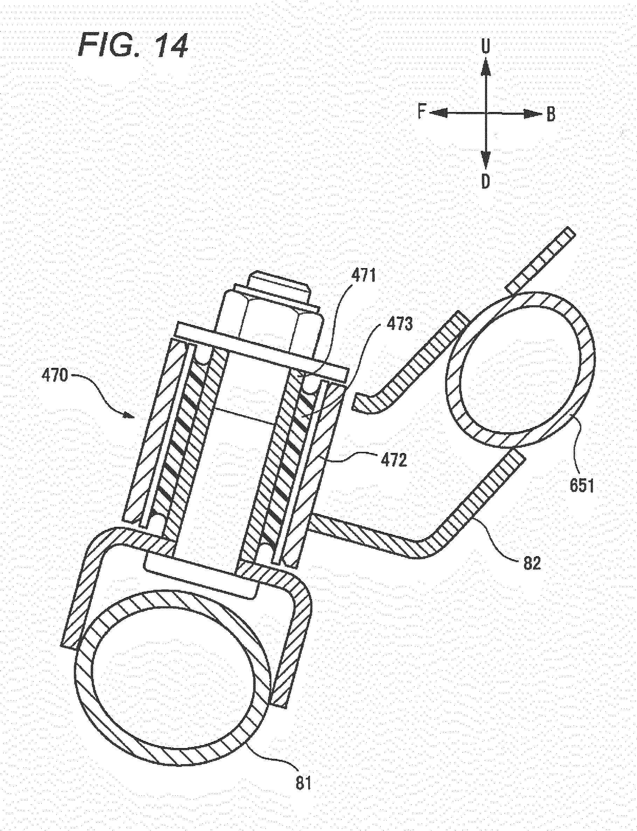

Figs. 13 and 14 show views showing a rubber component 470 of a vehicle 1 according to a fifth embodiment. Fig. 13A is a top view of a handlebar 651 and the rubber component 470. Fig. 13B is a front view of the handlebar 651 and the rubber component 470. Fig. 14 is a sectional view taken along a line defined by arrows XIV and viewed from a direction indicated by the arrows XIV in Fig. 13B. As shown in Figs. 13 and 14, the rubber component 470 may be provided between a steering shaft 652 and the handlebar 651.

As shown in Figs. 13A and 13B, in this embodiment, a handlebar post 80 is provided on an upper portion of the steering shaft 652 The rubber component 470 is provided on the handlebar post 80. The handlebar post 80 has a shaft connecting portion 81 which is fixed to the upper portion of the steering shaft 652 and a handlebar connecting portion 82 which is fixed to the handlebar 651. The shaft connecting portion 81 is a substantially T-shaped member when seen from the front thereof. The steering shaft 652 is fixed to a lower portion of the shaft connecting portion 81. An upper portion of the shaft connecting portion 81 extends in a left-and-right direction.

As shown in Fig. 14, The rubber component 470 has an inner tube portion 471, an outer tube portion 472 and a rubber portion 473. The outer tube portion 472 can be displaced relative to the inner tube portion 471 via the rubber portion 473. The rubber portion 473 fills at least part of a space defined between the inner tube portion 471 and the outer tube portion 472 to thereby connect the inner tube portion 471 and the outer tube portion 472 together. The inner tube portion 471 is fixed to the shaft connecting portion 81. The outer tube portion 472 is fixed to the handlebar connecting portion 82. The rubber portion 473 is formed of a rubber material having viscoelastic properties .

When the rider turns the handlebar 651, the handlebar connecting portion 82 is displaced relative to the shaft connecting portion 81 within a range where the rubber portion 473 is deformed elastically. Then, the outer tube portion 472 of the rubber component 470 which is fixed to the handlebar connecting portion 82 attempts to be displaced relative to the inner tube portion 471.

In the case of the outer tube portion 472 being turned within a range of a predetermined amount of displacement relative to the inner tube portion 471, the rubber portion 473 is elastically deformed. In this case, although the outer tube portion 472 is displaced, the inner tube portion 471, the shaft connecting portion 81 and the steering shaft 652 remain stationary.

When the outer tube portion 472 is displaced the predetermined amount of displacement or greater relative to the inner tube portion 471, the rubber portion 473 cannot be deformed elastically any more, or the handlebar connecting portion 82 is brought into contact with the shaft connecting portion 81, whereby the inner tube portion 471 and the shaft connecting portion 81 are displaced. Then, a left front wheel 31 and a right front wheel 32 are turned by way of the steering shaft 652, a pitman arm 663 and a tie rod 669.

In this way, in case the relative displacement amount between the inner tube portion 471 and the outer tube portion 472 stays within the predetermined amount of displacement, the rubber component 470 does not transmit the displacement of the handlebar connecting portion 82 to the shaft connecting portion 81. When considering an opposite force transmission path, even though the shaft connecting portion 81 and the inner tube portion 471 are displaced relative to the outer tube portion 472 within the range of the predetermined amount of displacement due to vibration of the steering shaft 652, the rubber component 470 does not transmit the vibration of the steering shaft 652 to the handlebar 651. Namely, the rubber component 470 provides a damper or shock absorbing function between the steering shaft 652 and the handlebar 651. The properties of the shock absorbing function can be controlled by controlling the viscoelastic properties of the rubber portion 473 of the rubber component 470.

According to the vehicle 1 of this embodiment, the rubber component 470 can restrain the vibration transmitted from the right front wheel 32 and the left front wheel 31 to the steering shaft 652 from being transmitted to the handlebar 651.

In this way, the rubber component 470 suppresses the transmission of the vibration attributed to a difference between a frictional force generated between the right front wheel 32 and a corresponding road surface and a frictional force generated between the left front wheel 31 and a corresponding road surface to a left grip portion 37 and a right grip portion 38. This makes it difficult for the vibration to be transmitted to the rider who grips on the left grip portion 37 and the right grip portion 38 when attempting to apply the brakes.

In the vehicle 1 according to this embodiment, the rubber component 470 is provided between the handlebar 651 and the steering shaft 652, and a steering force inputted into the left grip portion 37 and the right grip portion 38 is transmitted from the handlebar 651 to the steering shaft 652 via the rubber component 470.

According to the vehicle 1 of this embodiment, since the rubber component 470 is provided in the position which lies close to the handlebar 651, all the vibration transmitted to the left grip portion 37 and the right grip portion 38 including vibration which is transmitted to the handlebar 651 via a body frame 21 from a portion (for example, a rear wheel 4) other than the right front wheel 32 and the left front wheel 31 can be suppressed.

### <Modified Examples>

In the embodiments described heretofore, while the rubber component is described as having the inner tube portion and the outer tube portion, the invention is not limited thereto. The inner tube portion and the outer tube portion may be an annular member, an annular member which is partially cut out or a tubular member having an axial slit in addition to the tubular member.

The rubber component may be incorporated in a component which makes up the steering force transmission mechanism 6 or may be incorporated between a component and a component which make up the steering force transmission mechanism 6. Alternatively, the rubber component may be incorporated between a component which makes up the steering force transmission mechanism 6 and a component such as the body frame 21 which supports the steering force transmission mechanism 6. In either of the cases, as long as at least part of the rubber component is attached to the steering force transmission mechanism 6, the vibration which is transmitted from the left front wheel 31 and the right front wheel 32 to the left grip portion 37 and the right grip portion 38 can be suppressed.

In the embodiments which have been described heretofore, while it is described that the operation of the right brake operating device 36 activates the left brake device 33 and the right brake device 34 and that the operation of the left brake operating device 35 activates the rear brake device, the invention is not limited thereto.

A configuration may be adopted in which the operation of the right brake operating device activates the left brake device and the right brake device and the operation of a foot brake operating device activates the rear brake device.

Alternatively, a configuration may be adopted in which the operation of the right brake operating device activates the right brake device, while the operation of the left brake operating device activates the left brake device, and the operation of the foot brake operating device activates the rear brake device.

Alternatively, a configuration may be adopted in which the operation of the right brake operating device activates the rear brake device, while the operation of the left brake operating device activates the left brake device and the right brake device.

Alternatively, a configuration may be adopted in which the operation of the right brake operating device activates the right brake device and the left brake device, while the operation of the left brake operating device activates the rear brake device, the right brake device and the left brake device.

In the embodiments described above, the vehicle 1 is described as having the parallelogram link mechanism 5, the invention is not limited thereto. The invention can be applied to a vehicle having a link mechanism of a wishbone type, a leading arm type and the like. The invention may be applied to a vehicle not having a link mechanism which has two front wheels aligned side by side in the left-and-right direction and in which the two front wheels are connected together by a tie rod.

In the embodiments that have been described heretofore, the vehicle 1 is described as having the bar-like handlebar 651 which extends into a straight line in the left-and-right direction of the body frame 21. However, the invention is not limited thereto. The invention can be applied to a vehicle having a handlebar having grip portions at left and right end portions thereof including a handlebar which extends while being bent from a central portion so that left and right end portions are situated in a raised position.

In the embodiments described heretofore, while the construction is described in which the left shock absorbing device 61 is positioned on the left side of the left front wheel 31 and the right shock absorbing device 62 is positioned on the right side of the right front wheel 32, the invention is not limited thereto. The left shock absorbing device 61 may be positioned on the right of the left front wheel 31, and the right shock absorbing device 62 may be positioned on the left of the right front wheel 32. The left shock absorbing device 61 and the right shock absorbing device 62 may take the form of the telescopic shock absorbing device or may take the form of a shock absorbing device of a bottom link type, a trailing arm type or the like. The invention may not include the left shock absorbing device 61 and the right shock absorbing device 62.

In the above embodiments, the vehicle 1 includes the single rear wheel 4. However, the vehicle 1 may include a plurality of rear wheels.

In the above embodiments, the center of the rear wheel 4 in the left-and-right direction of the body frame 21 coincides with the center of the space defined between the left front wheel 31 and the right front wheel 32 in the left-and-right direction of the body frame 21. Although the configuration described above is preferable, the center of the rear wheel 4 in the left-and-right direction of the body frame 21 does not have to coincide with the center of the space defined between the left front wheel 31 and the right front wheel 32 in the left-and-right direction of the body frame 21.

A configuration may be adopted in which the link mechanism 5 includes a cross member other than the upper cross member 51 and the lower cross member 52. The "upper cross member" and the "lower cross member" are merely so called based on their relative positional relationship in the up-and-down direction. The upper cross member does not mean an uppermost cross member in the link mechanism 5. The upper cross member means a cross member which lies above another cross member which lies therebelow. The lower cross member does not mean a lowermost cross member in the link mechanism 5. The lower cross member means a cross member which lies below another cross member which lies thereabove.

In the embodiments described above, the upper cross member 51 is the single plate-shaped member, while the lower cross member 52 includes the front element 521 and the rear element 522. However, a configuration may be adopted in which the upper cross member 51 includes a front element and a rear element. Additionally, a configuration may be adopted in which the lower cross member 52 is made up of a single plate-shaped member. A configuration may be adopted in which at least one of the upper cross member 51 and the lower cross member 52 includes a left plate-shaped member which is supported on the headpipe 211 and the left side member 53 and a right plate-shaped member which is supported on the headpipe 211 and the right side member 54.

In the embodiments described above, the link mechanism 5 is supported on the headpipe 211. However, a configuration may be adopted in which the link mechanism 5 is supported on part of the body frame 21 other than the headpipe 211 which supports the steering shaft 652.

In the embodiments described above, the steering force transmission mechanism 6 includes the pitman arm 663, the left transmission plate 664, the right transmission plate 665, the intermediate joint 666, the left joint 667, the right joint 668, and the tie rod 669. However, as long as the steering force inputted from the handlebar 651 can be transmitted to the left front wheel 31 and the right front wheel 32 by way of the tie rod 669, the pitman arm 663, the left transmission plate 664, the right transmission plate 665, the intermediate joint 666, the left joint 667 and the right joint 668 may be replaced by appropriate mechanisms such as universal joints.

### [Description of Reference Numerals and Characters]

- 1: vehicle
- 2: vehicle main body portion
- 3: front wheel
- 4: rear wheel
- 5: link mechanism
- 6: steering force transmission mechanism
- 21: body frame
- 22: body cover
- 23: seat
- 24: power unit
- 25: rear arm
- 31: left front wheel
- 32: right front wheel
- 33: left brake device
- 34: right brake device
- 35: left brake operating device
- 36: right brake operating device
- 37: left grip portion
- 38: right grip portion
- 51: upper cross member
- 52: lower cross member
- 53: left side member
- 54: right side member
- 61: left shock absorbing device
- 62: right shock absorbing device
- 63: left bracket
- 64: right bracket
- 70: rubber component
- 71: inner tube portion
- 72: outer tube portion
- 73: rubber portion
- 74: bolt member
- 75: bearing
- 80: handlebar post
- 81: shaft connecting portion
- 82: handlebar connecting portion
- 170, 270, 370, 470: rubber component
- 171, 271, 371, 471: inner tube portion
- 172, 272, 372, 472: outer tube portion
- 173, 273, 373, 473: rubber portion
- 211: headpipe
- 212: main frame
- 221: front cover
- 222: front mudguard
- 651: handlebar
- 652: steering shaft
- 663: pitman arm
- 664: left transmission plate
- 665: right transmission plate
- 666: intermediate joint
- 666a: intermediate rear bearing
- 666b: intermediate front bearing
- 666c: intermediate connecting portion
- 667: left joint
- 667a: left rear bearing
- 667b: left front bearing
- 667c: left connecting portion
- 668: right joint
- 668a: right rear bearing
- 668b: right front bearing
- 668c: right connecting portion
- 669: tie rod
- 1663: pitman arm
- X: left turning axis
- Y: right turning axis
- Z: intermediate turning axis

## Claims

1. A vehicle (1) comprising:
a body frame (21);
a right front wheel (32) and a left front wheel (31) which are provided so as to be aligned side by side in a left-and-right direction of the body frame (21);
a right brake device (34) which can apply a brake force to the right front wheel (32);
a left brake device (33) which can apply a brake force to the left front wheel (31);
a grip portion (37, 38) on which a rider grips; and
a steering force transmission mechanism (6) which is configured to transmit a steering force inputted into the grip portion (37, 38) to the right front wheel (32) and the left front wheel (31), wherein
the steering force transmission mechanism (6) has:
a steering shaft (652) which can turn about an intermediate turning axis (Z) which extends in an up-and-down direction of the body frame (21);
a handlebar (651) which is provided at an upper portion of the steering shaft (652); and
a tie rod (669) which is configured to transmit a turn of the steering shaft (652) to the right front wheel (32) and the left front wheel (31), wherein
a brake operating device (35, 36) which is configured to operate at least one of the right brake device (34) and the left brake device (33) and the grip portion (37, 38) are provided on at least one end portion of the handlebar (651),
**characterized in that**
a rubber component (70, 170, 270, 370, 470) which is configured to suppress the transmission of vibration which is attributed to a difference between a frictional force generated between the right front wheel (32) and a corresponding road surface and a frictional force generated between the left front wheel (31) and a corresponding road surface to the grip portion (37, 38) is provided in the steering force transmission mechanism (6), wherein
the steering force which is inputted into the grip portion (37, 38) is configured to be transmitted to the right front wheel (32) and the left front wheel (31) via the rubber component (70, 170, 270, 370, 470),
wherein the rubber component (70, 170, 270, 370, 470) has:
a metallic annular or tubular outer member (72, 172, 272, 372, 472);
a metallic inner member (71, 171, 271, 371, 471) which is provided inside the outer member (72, 172, 272, 372, 472); and
a rubber portion (73, 173, 273, 373, 473) which is connected to the outer member (72, 172, 272, 372, 472) and the inner member (71, 171, 271, 371, 471) while filling at least part of a space defined between the outer member (72, 172, 272, 372, 472) and the inner member (71, 171, 271, 371, 471), and wherein
the inner member (71, 171, 271, 371, 471) and the outer member (72, 172, 272, 372, 472) are displaced relative to each other by the rubber portion (173, 273, 373, 473) being elastically deformed.

2. The vehicle (1) according to claim 1, comprising:
a right shock absorbing device (62) which supports rotatably the right front wheel (32) at a lower portion thereof and which supports the right front wheel (32) so as to be displaced relative to an upper portion; and
a left shock absorbing device (61) which supports rotatably the left front wheel (31) at a lower portion thereof and which supports the left front wheel (31) so as to be displaced relative to an upper portion.

3. The vehicle (1) according to claim 1 or 2, comprising a link mechanism (5) which has a cross member (51, 52) which is supported on the body frame (21) so as to turn about a link axis which extends in a front-and-rear direction of the body frame (21) and which supports the right front wheel (32) and the left front wheel (31) so as to be displaced relative to the body frame (21) in relation to the up-and-down direction of the body frame (21), thereby causing the body frame (21) to lean to the right of the vehicle (1) when the vehicle (1) is configured to turn right and causing the body frame (21) to lean to the left of the vehicle (1) when the vehicle (1) is configured to turn left.

4. The vehicle (1) according to claim 3, wherein
the link mechanism (5) has:
a right side member (54) which is supported so as to turn about a right axis which extends in the front-and-rear direction of the body frame (21) at a right portion of the cross member (51, 52) and which supports the right front wheel (32) so as to turn about a right turning axis (Y) which extends in the up-and-down direction of the body frame (21); and
a left side member (53) which is supported so as to turn about a left axis which is parallel to the right axis at a left portion of the cross member (51, 52) and which supports the left front wheel (31) so as to turn about a left turning axis (X) which is parallel to the right turning axis (Y).

5. The vehicle (1) according to any one of claims 1 to 4, wherein
the steering force transmission mechanism (6) has a pitman arm (663) which is fixed to the steering shaft (652) at one end and is connected to the tie rod (669) so as to turn relative thereto at the other end thereof, and wherein
the rubber component (170) is provided between the tie rod (669) and the pitman arm (663) so that a steering force inputted into the grip portion (37, 38) is transmitted from the pitman arm (663) to the tie rod (669) via the rubber component (170).

6. The vehicle (1) according to any one of claims 1 to 4, wherein
the rubber component (470) is provided between the handlebar (651) and the steering shaft (652), and wherein
a steering force inputted into the grip portion (37, 38) is transmitted from the handlebar (651) to the steering shaft (652) via the rubber component (470).

7. The vehicle (1) according to claim 1, wherein
the inner member (71, 171, 271, 371, 471) and the outer member (72, 172, 272, 372, 472) extend in the up-and-down direction of the body frame (21), and wherein
the outer member (72, 172, 272, 372, 472) and the inner member (71, 171, 271, 371, 471) can be displaced relative to each other by the rubber portion (173, 273, 373, 473) being elastically deformed.

8. The vehicle (1) according to claim 7, wherein
the outer member (72, 172, 272, 372, 472) and the inner member (71, 171, 271, 371, 471) can be displaced relative to each other in the front-and-rear direction of the body frame (21) by the rubber portion (173, 273, 373, 473) being elastically deformed.

9. The vehicle (1) according to claim 7, wherein
the outer member (72, 172, 272, 372, 472) and the inner member (71, 171, 271, 371, 471) can be displaced relative to each other in the front-and-rear direction of the body frame (21) and in the left-and-right direction of the body frame (21) by the rubber portion (173, 273, 373, 473) being elastically deformed.

10. The vehicle (1) according to any one of claims 2 and 3 to 6 as dependent on claim 2, wherein the right shock absorbing device (62) supports the right front wheel (32) so as to be displaced relative to an upper portion in the direction of a right extending and contracting axis which extends in the up-and-down direction of the body frame (21), wherein
the left shock absorbing device (61) supports the left front wheel (31) so as to be displaced relative to an upper portion in the direction of a left extending and contracting axis which is parallel to the right extending and contracting axis, and wherein
the inner member (71, 171, 271, 371, 471) and the outer member (72, 172, 272, 372, 472) can be displaced relative to each other about an axis which is parallel to the left extending and contracting axis by the rubber portion (73, 173, 273, 373, 473) of the rubber component (70, 170, 270, 370, 470) being elastically deformed.

## Patentansprüche

1. Ein Fahrzeug (1), das umfasst:
einen Körper-Rahmen (21);
ein rechtes Vorder-Rad (32) und ein linkes Vorder-Rad (31), die vorgesehen sind, so dass sie Seite an Seite in einer Links-und-Rechts-Richtung von dem Körper-Rahmen (21) ausgerichtet sind;
eine rechte Brems-Vorrichtung (34), die eine Brems-Kraft auf das rechte Vorder-Rad (32) aufbringen kann;
eine linke Brems-Vorrichtung (33), die eine Brems-Kraft auf das linke Vorder-Rad (31) aufbringen kann;
einen Griff-Abschnitt (37, 38), an den der Fahrer greift; und
einen Lenk-Kraft-Übertragungs-Mechanismus (6), der konfiguriert ist, um eine Lenk-Kraft, eingegeben in den Griff-Abschnitt (37, 38), auf das rechte Vorder-Rad (32) und das linke Vorder-Rad (31) zu übertragen, wobei
der Lenk-Kraft-Übertragungs-Mechanismus (6) hat:
eine Lenk-Welle (652), die um eine Zwischen-Dreh-Achse (Z) drehen kann, die sich in einer Oben-und-Unten-Richtung von dem Körper-Rahmen (21) erstreckt;
eine Lenk-Stange (651), die an einem oberen Abschnitt von der Lenk-Welle (652) vorgesehen ist; und
ein Anker-Stab (669), der konfiguriert ist, um eine Drehung von der Lenk-Welle (652) zu dem rechten Vorder-Rad (32) und dem linken Vorder-Rad (31) zu übertragen, wobei
eine Brems-Betätigungs-Vorrichtung (35, 36), die konfiguriert ist, um zumindest eine von der rechten Brems-Vorrichtung (34) und der linken Brems-Vorrichtung (33) zu betätigen, und der Griff-Abschnitt (37, 38) an zumindest einem End-Abschnitt von der Lenk-Stange (651) vorgesehen sind,
**dadurch gekennzeichnet, dass**
eine Gummi-Komponente (70, 170, 270, 370, 470), die konfiguriert ist, um die Übertragung von Vibrationen, die auf einen Unterschied zwischen einer Reibkraft, erzeugt zwischen dem rechten Vorder-Rad (32) und einer entsprechenden Straßenfläche, und einer Reibkraft, erzeugt zwischen dem linken Vorder-Rad (31) und einer entsprechenden Straßenfläche, zurückgeführt sind, zu dem Griff-Abschnitt (37, 38) zu unterdrücken, ist in dem Lenk-Kraft-Übertragungs-Mechanismus (6) vorgesehen,
wobei die Lenk-Kraft, die in den Griff-Abschnitt (37, 38) eingegeben ist, konfiguriert ist, um zu dem rechten Vorder-Rad (32) und dem linken Vorder-Rad (31) über die Gummi-Komponente (70, 170, 270, 370, 470) übertragen zu werden,
wobei die Gummi-Komponente (70, 170, 270, 370, 470) hat:
ein metallisches Ring- oder Rohr-Außen-Element (72, 172, 272, 372, 472);
ein metallisches Innen-Element (71, 171, 271, 371, 471), das in dem Außen-Element (72, 172, 272, 372, 472) vorgesehen ist; und
einen Gummi-Abschnitt (73, 173, 273, 373, 473), der mit dem Außen-Element (72, 172, 272, 372, 472) und dem Innen-Element (71, 171, 271, 371, 471) verbunden ist, während es zumindest ein Teil von dem Raum, definiert zwischen dem Außen-Element (72, 172, 272, 372, 472) und dem Innen-Element (71, 171, 271, 371, 471), ausfüllt, und wobei
das Innen-Element (71, 171, 271, 371, 471) und das Außen-Element (72, 172, 272, 372, 472) relativ zueinander, durch den Gummi-Abschnitt (173, 273, 373, 473), der elasisch verformt ist, verlagert sind.

2. Das Fahrzeug (1) gemäß Anspruch 1, das umfasst:
eine rechte Stoß-Dämpf-Vorrichtung (62), die drehbar das rechte Vorder-Rad (32) an einem unteren Abschnitt derselben lagert, und die das rechte Vorder-Rad (32) lagert, so dass es relativ an einem oberen Abschnitt verlagert ist; und
eine linke Stoß-Dämpf-Vorrichtung (61), die drehbar das linke Vorder-Rad (31) an einem unteren Abschnitt derselben lagert, und die das linke Vorder-Rad (31) lagert, so dass es relativ zu einem oberen Abschnitt verlagert ist.

3. Das Fahrzeug (1) gemäß Anspruch 1 oder 2, das einen Lenker-Mechanismus (5) umfasst, der ein Quer-Element (51, 52) hat, das durch den Körper-Rahmen (21) gelagert ist, so dass es drehbar um eine Lenker-Achse ist, die sich in einer Vorder-und-Rück-Richtung von dem Körper-Rahmen (21) erstreckt, und welches das rechte Vorder-Rad (32) und das linke Vorder-Rad (31) lagert, so dass diese relativ zu dem Körper-Rahmen (21) in Bezug auf die Oben-und-Unten-Richtung von dem Körper-Rahmen (21) verlagert sind, wodurch der Körper-Rahmen (21) veranlasst ist, sich nach rechts von dem Fahrzeug (1) zu neigen, wenn das Fahrzeug (1) konfiguriert ist, rechts abzubiegen, und den Körper-Rahmen (21) veranlasst, sich nach links von dem Fahrzeug (1) zu neigen, wenn das Fahrzeug (1) konfiguriert ist, links abzubiegen.

4. Das Fahrzeug (1) gemäß Anspruch 3, wobei
der Lenker-Mechanismus (5) hat:
ein Rechts-Seiten-Element (54), das gelagert ist, so dass es um eine rechte Achse dreht, die sich in der Vorder-und-Rück-Richtung von dem Körper-Rahmen (21) an einem rechten Abschnitt von dem Quer-Element (51, 52) erstreckt, und welche das rechte Vorder-Rad (32) lagert, so dass es um eine rechte Dreh-Achse (Y) drehbar ist, die sich in der Oben-und-Unten-Richtung von dem Körper-Rahmen (21) erstreckt; und
ein Links-Seiten-Element (53), das gelagert ist, so dass es um eine linke Achse dreht, die parallel zu der rechten Achse, an einem linken Abschnitt von dem Quer-Element (51, 52) ist, und welche das linke Vorder-Rad (31) lagert, so dass es um eine linke Dreh-Achse (X) dreht, die parallel zu der rechten Dreh-Achse (Y) ist.

5. Das Fahrzeug (1) gemäß zu irgendeinem der Ansprüche 1 bis 4, wobei
der Lenk-Kraft-Übertragungs-Mechanismus (6) einen Lenk-Hebel (663) hat, der an der Lenk-Welle (652) an einem Ende fixiert ist, und mit der Anker-Stab (669) verbunden ist, so dass dieser relativ an dem anderen Ende desselben drehen kann, und wobei die Gummi-Komponente (170) zwischen dem Anker-Stab (669) und dem Lenk-Hebel (663) vorgesehen ist, so dass eine Lenk-Kraft, eingegeben in den Griff-Abschnitt (37, 38), von dem Lenk-Hebel (663) zu dem Ankerstab (669) über die Gummi-Komponente (170) übertragen ist.

6. Das Fahrzeug (1) gemäß zu irgendeinem der Ansprüche 1 bis 4, wobei die Gummi-Komponente (470) zwischen der Lenk-Stange (651) und der Lenk-Welle (652) vorgesehen ist, und wobei
eine Lenk-Kraft, eingegeben in den Griff-Abschnitt (37, 38) von der Lenk-Stange (651), auf die Lenk-Welle (652) über die Gummi-Komponente (470) übertragen ist.

7. Das Fahrzeug (1) gemäß Anspruch 1, wobei
das Innen-Element (71, 171, 271, 371, 471) und das Außen-Element (72, 172, 272, 372, 472) sich in die Oben-und-Unten-Richtung von dem Körper-Rahmen (21) erstrecken, und wobei
das Außen-Element (72, 172, 272, 372, 472) und das Innen-Element (71, 171, 271, 371, 471) relativ zueinander, durch den Gummi-Abschnitt (173, 273, 373, 473), der elastisch verformt ist, verlagert werden können.

8. Das Fahrzeug (1) gemäß Anspruch 7, wobei
das Außen-Element (72, 172, 272, 372, 472) und das Innen-Element (71, 171, 271, 371, 471) relativ zueinander in der Vorder-und-Rück-Richtung von dem Körper-Rahmen (21), durch den Gummi-Abschnitt (173, 273, 373, 473), der elastisch verformt ist, verlagert werden können.

9. Das Fahrzeug (1) gemäß Anspruch 7, wobei
das Außen-Element (72, 172, 272, 372, 472) und das Innen-Element (71, 171, 271, 371, 471) relativ zueinander in der Vorder-und-Rück-Richtung von dem Körper-Rahmen (21) und in der Links-und-Rechts-Richtung von dem Körper-Rahmen (21), durch den Gummi-Abschnitt (173, 273, 373, 473), der elastisch verformt ist, verlagert werden können.

10. Das Fahrzeug (1) gemäß zu irgendeinem der Ansprüche 2 und 3 bis 6 abhängig von Anspruch 2, wobei
die rechte Stoß-Dämpf-Vorrichtung (62) das rechte Vorder-Rad (32) lagert, so dass es relativ an einem oberen Abschnitt in der Richtung von einer rechten Ausfahr- und EinfahrAchse, die sich in der Oben-und-Unten-Richtung von dem Körper-Rahmen (21) erstreckt, verlagert ist, wobei
die linke Stoß-Dämpf-Vorrichtung (61) das linke Vorder-Rad (31) lagert, so dass es relativ zu einem oberen Abschnitt in der Richtung von einer linken Ausfahr- und EinfahrAchse, die parallel zu der rechten Ausfahr- und Einfahrachse ist, verlagert ist, und wobei
das Innen-Element (71, 171, 271, 371, 471) und das Außen-Element (72, 172, 272, 372, 472) relativ zueinander, um eine Achse, die parallel zu der linken Ausfahr- und EinfahrAchse ist, durch den Gummi-Abschnitt (73, 173, 273, 373, 473) von der Gummi-Komponente (70, 170, 270, 370, 470), die elastisch verformt ist, verlagert werden können.

## Revendications

1. Véhicule (1) comprenant :
un cadre (21),
une roue avant droite (32) et une roue avant gauche (31) qui sont disposées de sorte à être alignées côte à côte dans la direction gauche droite du cadre (21),
un dispositif de frein droit (34) qui peut appliquer une force de freinage à la roue avant droite (32),
un dispositif de frein gauche (33) qui peut appliquer une force de freinage à la roue avant gauche (31),
un organe de préhension (37, 38) auquel s'agrippe un pilote, et
un mécanisme de transmission de force de braquage (6) qui est configuré pour transmettre une force de braquage appliquée sur l'organe de préhension (37, 38) à la roue avant droite (32) et à la roue avant gauche (31), dans lequel
le mécanisme de transmission de force de braquage (6) possède :
une colonne de direction (652) qui peut tourner autour d'un axe de rotation intermédiaire (Z) qui s'étend dans la direction haut bas du cadre (21),
un guidon (651) qui est disposé au niveau de la partie supérieure de la colonne de direction (652), et
une barre d'accouplement (669) qui est configurée pour transmettre une rotation de la colonne de direction (652) à la roue avant droite (32) et à la roue avant gauche (31), dans lequel
un dispositif de manœuvre de frein (35, 36), qui est configuré pour manœuvrer au moins l'un du dispositif de frein droit (34) et du dispositif de frein gauche (33), et l'organe de préhension (37, 38) sont disposés sur au moins une extrémité du guidon (651),
**caractérisé en ce que**
un composant de caoutchouc (70, 170, 270, 370, 470), qui est configuré pour supprimer sur l'organe de préhension (37, 38) la transmission des vibrations qui sont attribuées à la différence existant entre la force de frottement générée entre la roue avant droite (32) et la surface de la route correspondante et la force de frottement générée entre la roue avant gauche (31) et la surface de la route correspondante, est prévu dans le mécanisme de transmission de force de braquage (6), dans lequel
la force de braquage, qui est appliquée sur l'organe de préhension (37, 38), est configurée pour être transmise à la roue avant droite (32) et à la roue avant gauche (31) par l'intermédiaire du composant de caoutchouc (70, 170, 270, 370, 470),
dans lequel le composant de caoutchouc (70, 170, 270, 370, 470) possède :
un élément externe métallique (72, 172, 272, 372, 472) annulaire ou tubulaire,
un élément interne métallique (71, 171, 271, 371, 471) qui est disposé à l'intérieur de l'élément externe (72, 172, 272, 372, 472), et
un organe de caoutchouc (73, 173, 273, 373, 473) qui est relié à l'élément externe (72, 172, 272, 372, 472) et à l'élément interne (71, 171, 271, 371, 471) tout en remplissant au moins une partie d'un espace défini entre l'élément externe (72, 172, 272, 372, 472) et l'élément interne (71, 171, 271, 371, 471), et dans lequel
l'élément interne (71, 171, 271, 371, 471) et l'élément externe (72, 172, 272, 372, 472) sont déplacés l'un par rapport à l'autre grâce à l'organe de caoutchouc (73, 173, 273, 373, 473) déformé élastiquement.

2. Véhicule (1) selon la revendication 1, comprenant :
un dispositif d'amortisseur droit (62) qui supporte en rotation la roue avant droite (32) au niveau de sa partie inférieure et qui supporte la roue avant droite (32) de sorte à ce qu'elle soit déplacée par rapport à la partie supérieure, et
un dispositif d'amortisseur gauche (61) qui supporte en rotation la roue avant gauche (31) au niveau de sa partie inférieure et qui supporte la roue avant gauche (31) de sorte à ce qu'elle soit déplacée par rapport à la partie supérieure.

3. Véhicule (1) selon la revendication 1 ou la revendication 2, comprenant un mécanisme de liaison (5) qui possède un élément transversal (51, 52) qui est supporté sur le cadre (21) de sorte à tourner autour d'un axe de liaison qui s'étend dans la direction avant arrière du cadre (21), et qui supporte la roue avant droite (32) et la roue avant gauche (31) de sorte à ce qu'elles soient déplacées par rapport au cadre (21) par rapport à la direction haut bas du cadre (21), ce qui amène ainsi le cadre (21) à pencher vers la droite du véhicule (1) lorsque le véhicule (1) est configuré pour tourner à droite et ce qui amène le cadre (21) à pencher vers la gauche du véhicule (1) lorsque le véhicule (1) est configuré pour tourner à gauche.

4. Véhicule (1) selon la revendication 3, dans lequel :
le mécanisme de liaison (5) possède :
un élément latéral droit (54) qui est supporté de sorte à tourner autour d'un axe droit qui s'étend dans la direction avant arrière du cadre (21) sur la partie droite de l'élément transversal (51, 52) et qui supporte la roue avant droite (32) de sorte à ce qu'elle tourne autour d'un axe de rotation droit (Y) qui s'étend dans la direction haut bas du cadre (21), et
un élément latéral gauche (53) qui est supporté de sorte à tourner autour d'un axe gauche qui est parallèle à l'axe droit au niveau de la partie gauche de l'élément transversal (51, 52) et qui supporte la roue avant gauche (31) de sorte à ce qu'elle tourne autour d'un axe de rotation gauche (X) qui est parallèle à l'axe de rotation droit (Y).

5. Véhicule (1) selon l'une quelconque des revendications 1 à 4, dans lequel :
le mécanisme de transmission de force de braquage (6) comporte un levier de direction (663) qui est fixé à la colonne de direction (652) à une extrémité et qui est relié à l'autre extrémité de celle-ci à la barre d'accouplement (669) de sorte à tourner par rapport à celle-ci, et dans lequel
le composant de caoutchouc (170) est disposé entre la barre d'accouplement (669) et le levier de direction (663) de sorte à ce qu'une force de braquage appliquée sur l'organe de préhension (37, 38) soit transmise à partir du levier de direction à la barre d'accouplement (669) par l'intermédiaire du composant de caoutchouc (170).

6. Véhicule (1) selon l'une quelconque des revendications 1 à 4, dans lequel :
le composant de caoutchouc (470) est disposé entre le guidon (651) et la colonne de direction (652), et dans lequel
la force de braquage appliquée sur l'organe de préhension (37, 38) est transmise à partir du guidon (651) à la colonne de direction (662) par l'intermédiaire du composant de caoutchouc (470).

7. Véhicule (1) selon la revendication 1, dans lequel :
l'élément interne (71, 171, 271, 371, 471) et l'élément externe (72, 172, 272, 372, 472) s'étendent dans la direction haut bas du cadre (21), et dans lequel
l'élément externe (72, 172, 272, 372, 472) et l'élément interne (71, 171, 271, 371, 471) peuvent être déplacés l'un par rapport à l'autre par l'intermédiaire de l'organe de caoutchouc (73, 173, 273, 373, 473) déformé élastiquement.

8. Véhicule (1) selon la revendication 7, dans lequel :
l'élément externe (72, 172, 272, 372, 472) et l'élément interne (71, 171, 271, 371, 471) peuvent être déplacés l'un par rapport à l'autre dans la direction avant arrière du cadre (21) grâce à l'organe de caoutchouc (73, 173, 273, 373, 473) déformé élastiquement.

9. Véhicule (1) selon la revendication 7, dans lequel :
l'élément externe (72, 172, 272, 372, 472) et l'élément interne (71, 171, 271, 371, 471) peuvent être déplacés l'un par rapport à l'autre dans la direction avant arrière du cadre (21) et dans la direction gauche droite du cadre (21) grâce à l'organe de caoutchouc (73, 173, 273, 373, 473) déformé élastiquement.

10. Véhicule (1) selon l'une quelconque des revendications 2 et 3 à 6, dépendantes de la revendication 2, dans lequel :
le dispositif d'amortisseur droit (62) supporte la roue avant droite (32) de sorte à ce qu'elle se déplace par rapport à la partie supérieure dans la direction d'un axe droit s'étendant et se contractant qui s'étend dans la direction haut bas du cadre (21), dans lequel
le dispositif d'amortisseur gauche (61) supporte la roue avant gauche (31) de sorte à ce qu'elle se déplace par rapport à la partie supérieure dans la direction d'un axe gauche s'étendant et se contractant qui est parallèle à l'axe droit s'étendant et se contractant, et dans lequel
l'élément interne (71, 171, 271, 371, 471) et l'élément externe (72, 172, 272, 372, 472) peuvent être déplacés l'un par rapport à l'autre autour d'un axe qui est parallèle à l'axe gauche s'étendant et se contractant grâce à l'organe de caoutchouc (73, 173, 273, 373, 473) du composant de caoutchouc (70, 170, 270, 370, 470) déformé élastiquement.
